# EUROPEAN PATENT APPLICATION

(11) **EP 4 632 724 A1**
(43) Date of publication of application: **15.10.2025**
(21) Application number: 24222772.6
(22) Date of filing: 23.12.2024
(51) Int. Cl.: G09G 3/3208, G09G 5/37, G09G 5/38

(54) **IMAGE DISPLAY APPARATUS**

(30) Priority: 11.04.2024 KR 20240048532
(71) Applicant: LG Electronics Inc., Yeongdeungpo-gu Seoul 07336 (KR)
(72) Inventor: PARK, Kyeongryeol, 06772 Seoul (KR)
(74) Representative: Vossius & Partner Patentanwälte Rechtsanwälte mbB

(57) **Abstract**

The present disclosure relates to an image display apparatus An image display apparatus according to an embodiment of the present disclosure includes: a display including an organic light emitting diode (OLED) panel; and a signal processing device to output an image signal to the display, wherein, upon displaying a plurality of objects apart from each other, the signal processing device is configured to: separate, at a first time, a first object and a second object of the plurality of objects by a first distance; and separate, at a second time after the first time, the first object and the second object by a second distance different from the first distance. Accordingly, it is possible to maintain balance between the objects in the image while reducing degradation.

## Description

### BACKGROUND

### 1. Field

. The present disclosure relates to an image display apparatus, and more particularly, to an image display apparatus capable of maintaining balance between objects in an image while reducing degradation.

### 2. Description of the Related Art

. An image display apparatus is an apparatus that displays images through a display.

. Such an image display apparatus can display an image stored therein or an image received from the outside.

. Meanwhile, a display equipped with an organic light emitting diode (OLED) panel is susceptible to degradation such as burn-in.

. Therefore, as for an image display apparatus including an OLED-based panel, it is preferable to perform signal processing to reduce degradation.

. Meanwhile, Korean Laid-Open Patent Publication No. 10-2016-0034459, which is a related art, discloses an organic light emitting display device capable of reducing image persistence or image retention by shifting a displayed image in a first direction by a predetermined pixel interval.

. However, in the related art, as the entire image moves in the same direction, a black area in the form of a frame, which is not included in the original image, occurs on the edges of a screen.

### SUMMARY

. The present disclosure describes an image display apparatus that can maintain balance between objects in an image while reducing degradation.

. The present disclosure also describes an image display apparatus that can suppress the occurrence of black areas when a process of reducing degradation is performed.

. According to one aspect of the subject matter described in this application, an image display apparatus includes: a display including an organic light emitting diode (OLED) panel; and a signal processing device to output an image signal to the display, wherein, upon displaying a plurality of objects apart from each other, the signal processing device is configured to: separate, at a first time, a first object and a second object of the plurality of objects by a first distance; and separate, at a second time after the first time, the first object and the second object by a second distance different from the first distance.

. Upon displaying the plurality of objects, the signal processing device may be configured to separate, at a second time after the first time, the first object and the second object by a second distance greater than the first distance.

. The signal processing device may be configured to control sizes of the first object and the second object displayed at the second time to be less than sizes of the first object and the second object displayed at the first time.

. At the second time, the signal processing device may be configured to: move the first object in a first direction; and move the second object in a second direction different from the first direction.

. At the second time, the signal processing device may be configured to: move the first object in a first direction; and move the second object in a second direction opposite to the first direction.

. Upon displaying the plurality of objects, the signal processing device may be configured to: separate, at the first time, a third object and a fourth object of the plurality of objects by a third distance; and separate, at the second time, the third object and the fourth object by a fourth distance different from the third distance.

. Upon displaying the plurality of objects, the signal processing device may be configured to separate, at a second time after the first time, the third object and the fourth object by a fourth distance greater than the third distance.

. The signal processing device may be configured to control sizes of the third object and the fourth object displayed at the second time to be less than sizes of the third object and the fourth object displayed at the first time.

. At the second time, the signal processing device may be configured to: move the third object in a third direction; and move the fourth object in a fourth direction different from the third direction.

. At the second time, the signal processing device may be configured to: move the third object in a third direction; and move the fourth object in a fourth direction opposite to the third direction.

. At the second time, the signal processing device may be configured to: move a first icon adjacent to the first object in the first direction; and move a second icon adjacent to the second object in the second direction different from the first direction.

. The signal processing device may be configured to move, at the second time, a third icon adjacent to the third object in a third direction.

. According to another aspect, an image display apparatus includes: a display including an organic light emitting diode (OLED) panel; and a signal processing device to output an image signal to the display, wherein, upon displaying a plurality of objects apart from each other, the signal processing device is configured to: set, at a first time, an area including a first object and a second object of the plurality of objects to a first size; and set, at a second time after the first time, the area including the first object and the second object to a second size different from the first size.

. Upon displaying the plurality of objects, the signal processing device may be configured to set, at a second time after the first time, the area including the first object and the second object to a second size greater than the first size.

. At the second time, the signal processing device may be configured to: move the first object in a first direction; and move the second object in a second direction different from the first direction.

. At the second time, the signal processing device may be configured to: move the first object in a first direction; and move the second object in a second direction opposite to the first direction.

. Upon displaying the plurality of objects, the signal processing device may be configured to: set, at the first time, an area including the first object, the second object, a third object, and a fourth object of the plurality of objects to a third size; and set, at the second time, the area including the first to fourth objects to a fourth size different from the third size.

. The signal processing device may be configured to control sizes of the first to fourth objects displayed at the second time to be greater than sizes of the first to fourth objects displayed at the first time.

. At the second time, the signal processing device may be configured to: move the third object in a third direction; and move the fourth object in a fourth direction different from the third direction.

. At the second time, the signal processing device may be configured to: move the third object in a third direction; and move the fourth object in a fourth direction opposite to the third direction.

. At the second time, the signal processing device may be configured to: move a first icon adjacent to the first object in the first direction; and move a second icon adjacent to the second object in the second direction different from the first direction.

. The signal processing device may be configured to move, at the second time, a third icon adjacent to the third object in the third direction.

### BRIEF DESCRIPTION OF THE DRAWINGS

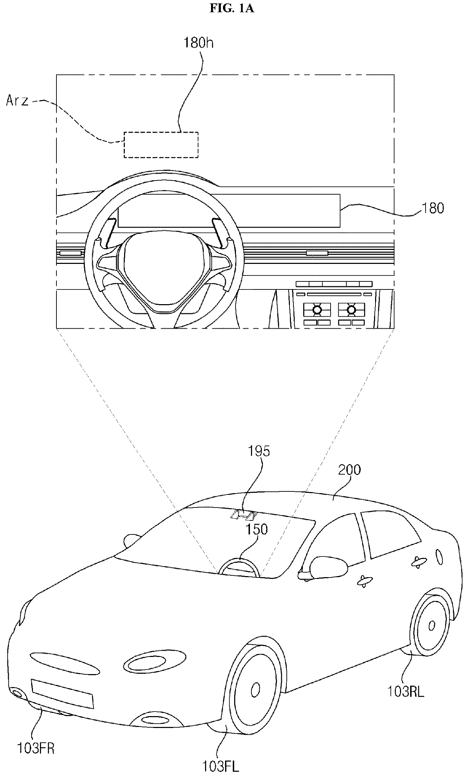

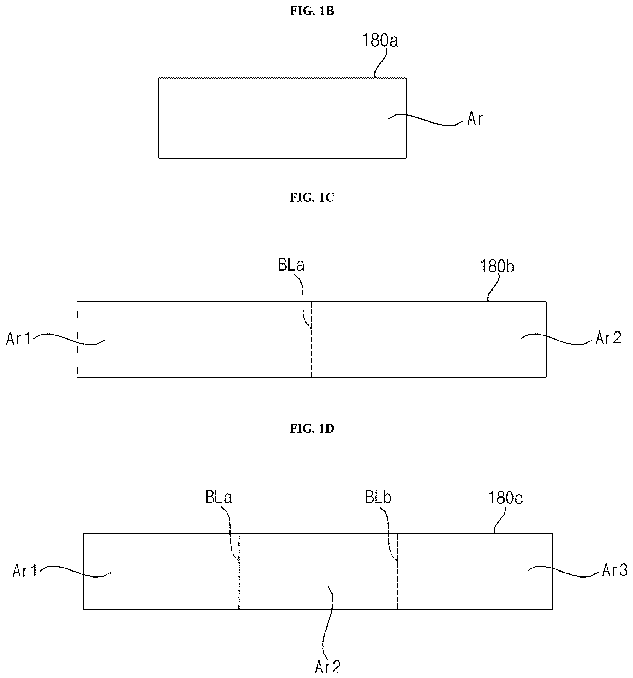

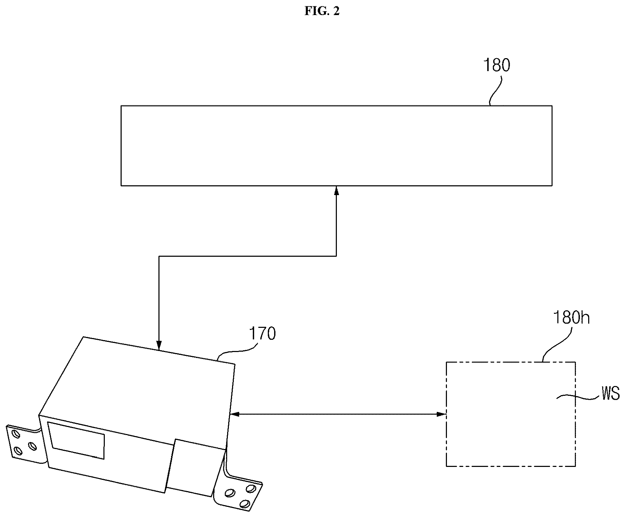

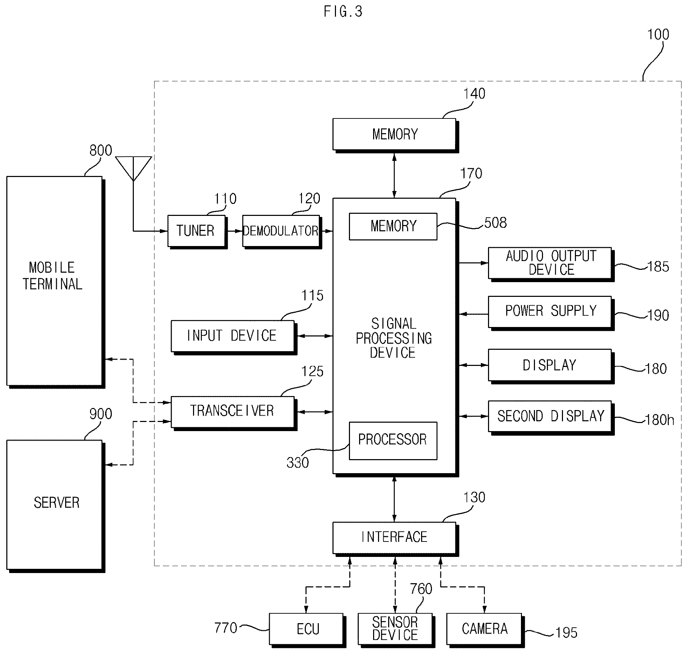

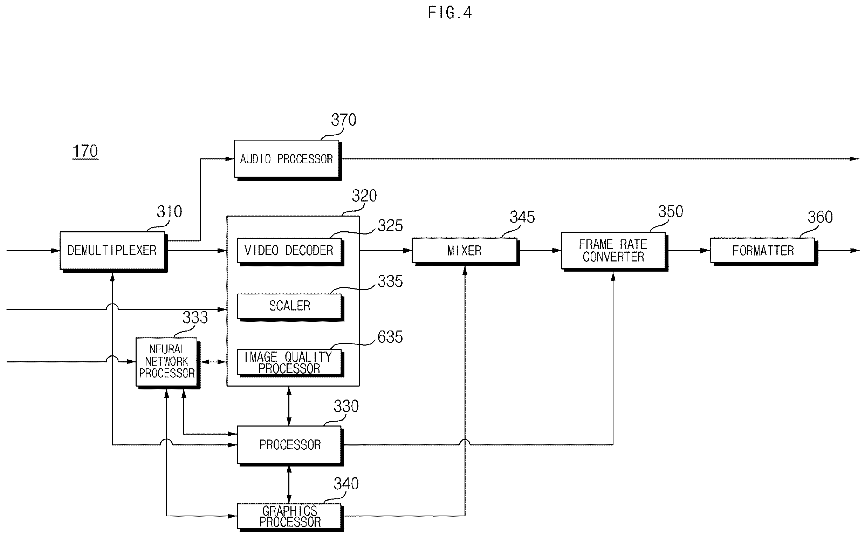

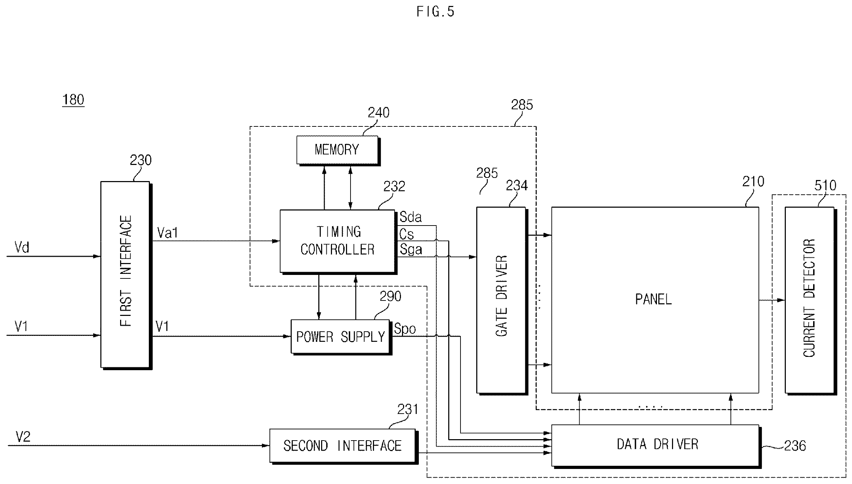

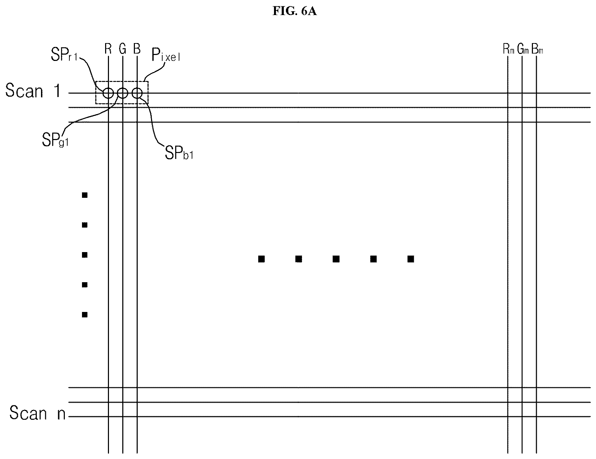

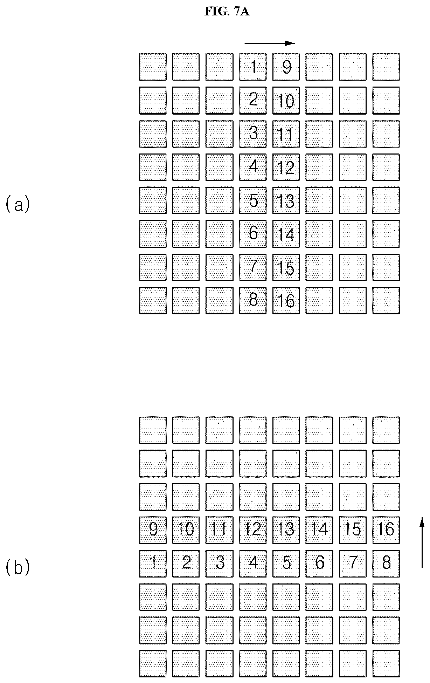

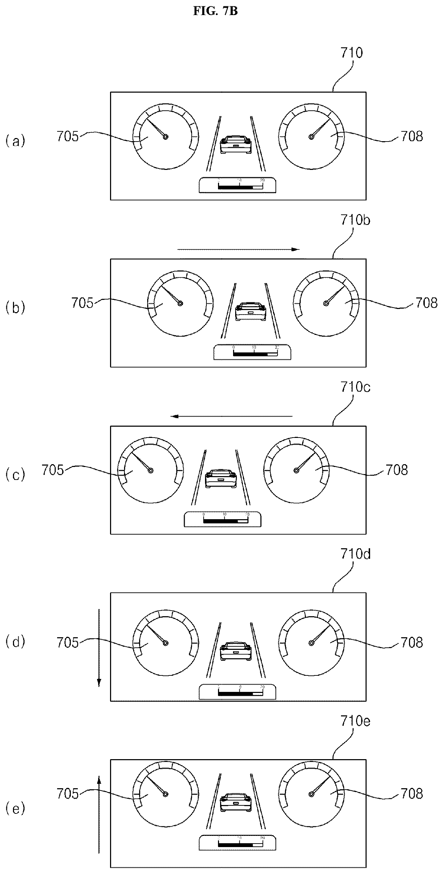

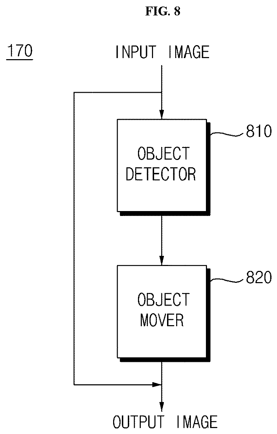

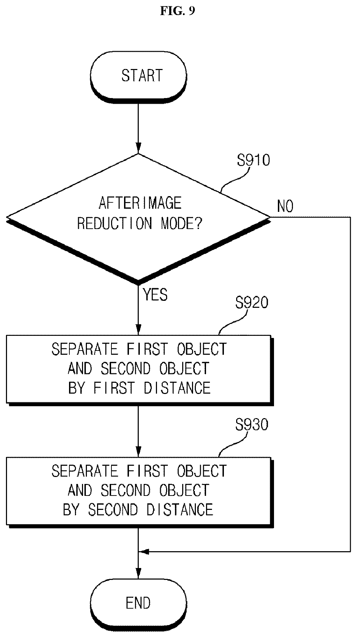

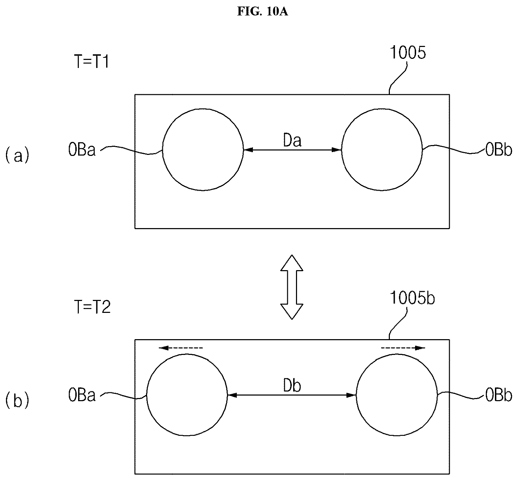

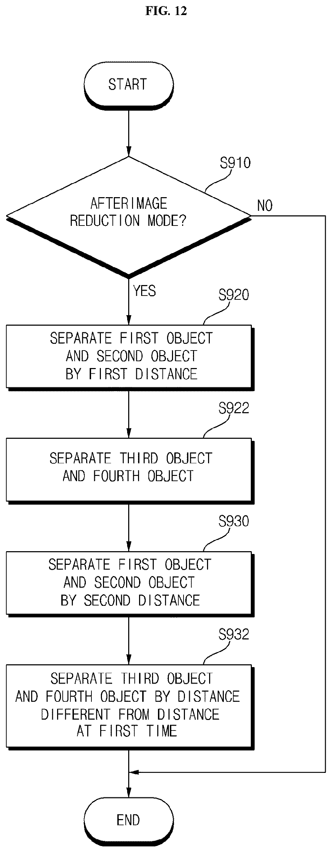

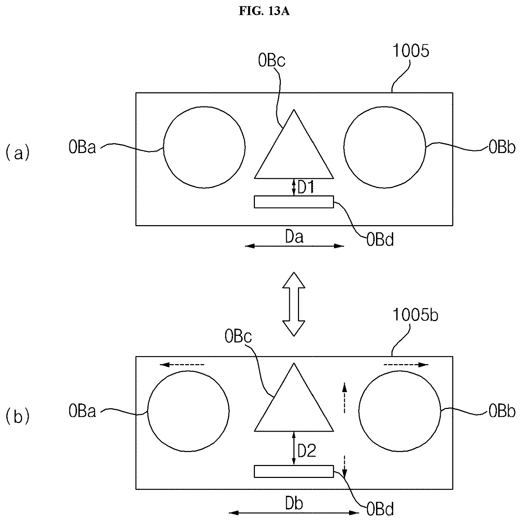

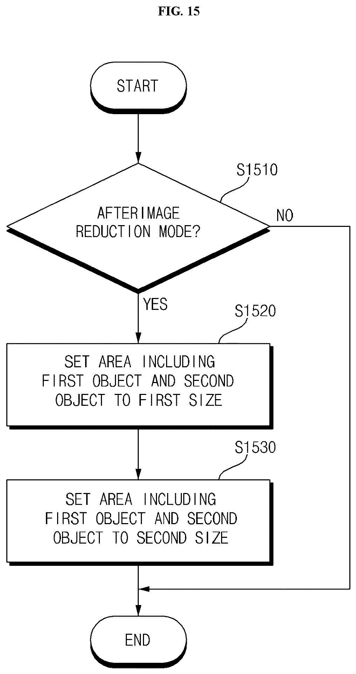

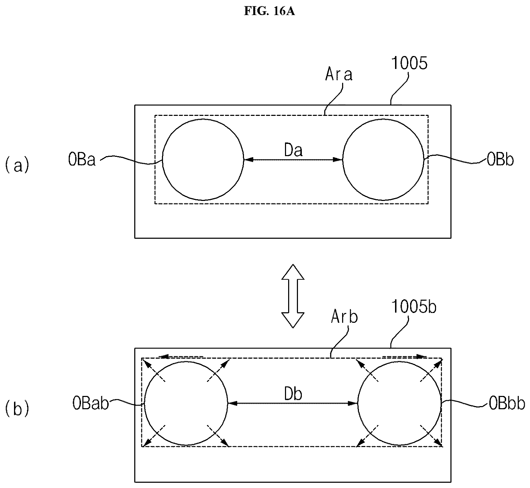

. FIG. 1A illustrates an example of the exterior and interior of a vehicle.
. FIGS. 1B to 1D illustrate various examples of a display.
. FIG. 2 illustrates an outer appearance of an image display apparatus according to an embodiment of the present disclosure.
. FIG. 3 illustrates an example of an internal block diagram of the image display apparatus of FIG. 2.
. FIG. 4 illustrates an example of an internal block diagram of a signal processing device of FIG. 3.
. FIG. 5 is an internal block diagram of a display of FIG. 3.
. FIGS. 6A to 6D are diagrams for explaining an organic light emitting diode (OLED) panel of FIG. 5.
. FIGS. 7A and 7B are diagrams for explaining an image display apparatus related to the present disclosure.
. FIG. 8 illustrates an example of an internal block diagram of a signal processing device according to an embodiment of the present disclosure.
. FIG. 9 is a flowchart illustrating the operation of an image display apparatus according to one embodiment of the present disclosure.
. FIGS. 10A to 11D are diagrams for explaining FIG. 9.
. FIG. 12 is a flowchart illustrating the operation of an image display apparatus according to another embodiment of the present disclosure.
. FIGS. 13A to 14C are diagrams for explaining FIG. 12.
. FIG. 15 illustrates the operation of an image display apparatus according to yet another embodiment of the present disclosure.
. FIGS. 16A to 19B are diagrams for explaining FIG. 15.

### DETAILED DESCRIPTION

. Hereinafter, the present disclosure will be described in detail with reference to the accompanying drawings.

. With respect to constituent elements used in the following description, suffixes "module" and "unit" are given only in consideration of ease in preparation of the specification, and do not have or serve different meanings. Accordingly, the suffixes "module" and "unit" may be used interchangeably.

. FIG. 1A illustrates an example of the exterior and interior of a vehicle.

. Referring to FIG. 1A, a vehicle 200 may include a plurality of wheels 103FR, 103FL, 103RL,... rotated by a power source and a steering wheel 150 to adjust a traveling direction of the vehicle 200.

. The vehicle 200 may further include a camera 195 to acquire an image of the front of the vehicle.

. The vehicle 200 may further include therein a plurality of displays 180 and 180h to display an image, information, and the like.

. For example, as for the plurality of displays 180 and 180h, a first display 180 may be a cluster display or an audio video navigation (AVN) display, and a second display 180h may be a head-up display (HUD) configured to project an image in a predetermined area Ara of a windshield WS.

. Meanwhile, an image display apparatus 100 (see FIG. 3) of the present disclosure is configured such that, of a plurality of displays 180 and 180h, a first display 180 includes an organic light emitting diode (OLED) panel.

. In particular, the first display 180 in the image display apparatus 100 (see FIG. 3) according to an embodiment of the present disclosure includes an organic light emitting diode (OLED) panel 210 (see FIG. 5) and a driving controller 285 (see FIG. 5) configured to output a driving signal to the OLED 210.

. Meanwhile, a signal processing device 170 (see FIG. 3) in the image display apparatus 100 (see FIG. 3) according to an embodiment of the present disclosure outputs an image signal to the first display 180.

. When displaying a plurality of objects apart from each other, the signal processing device 170 controls, at a first time, a first object and a second object of the plurality of objects to be separated by a first distance and controls, at a second time after the first time, the first object and the second object to be separated by a second distance different from the first distance. Accordingly, it is possible to maintain balance between the objects in the image while reducing degradation. In particular, it is possible to suppress the occurrence of black areas when a process of reducing degradation is performed.

. Meanwhile, the vehicle 200 described herein may be a concept including all of an internal combustion engine vehicle having an engine as a power source, a hybrid vehicle having an engine and an electric motor as power sources, and an electric vehicle having an electric motor as a power source.

. In some embodiments, the first display 180 may be operated in a pop-up mode or a pop-down mode under the control of a motor driver (not shown).

. For example, the first display 180 may be configured such that, in the pop-down mode, only a first area (not shown) protrudes on a dashboard (not shown) to display a first image in the first area and, in the pop-up mode, the first area and a second area (not shown) protrude on the dashboard to display a second image in the first area and the second area.

. In some embodiments, the first display 180 may be operated by being divided into a plurality of areas. This will be described below with reference to FIGS. 1C and 1D.

. FIGS. 1B to 1D illustrate various examples of a display.

. FIG. 1B illustrates a display according to one embodiment of the present disclosure.

. Referring to FIG. 1B, a display 180a according to one embodiment of the present disclosure may be a cluster display for providing a vehicle driver with information such as vehicle driving speed, etc.

. FIG. 1C illustrates a display according to another embodiment of the present disclosure.

. Referring to FIG. 1C, a display 180b according to another embodiment of the present disclosure may include, with respect to a boundary BLa, a first area Ar1 on the left side and a second area Ar2 on the right side.

. The first area Ar1 may correspond to a cluster display area, and the second area Ar2 may correspond to an AVN display area.

. That is, unlike the display 180a of FIG. 1B, the display 180b of FIG. 1C may extend to the AVN display area, in addition to the cluster display area corresponding to a driver's seat area.

. FIG. 1D illustrates a display according to yet another embodiment of the present disclosure.

. Referring to FIG. 1D, a display 180c according to yet another embodiment of the present disclosure may include a first area Ar1 on the left side with respect to a first boundary BLa, a second area Ar2 on the right side with respect to the first boundary BLa, and a third area Ar3 on the right side with respect to a second boundary BLb.

. The first area Ar1 may correspond to a cluster display area, the second area Ar2 may correspond to an AVN display area, and a third area Ar3 may correspond to a passenger seat display.

. That is, unlike the display 180b of FIG. 1C, the display 180c of FIG. 1D may extend to the passenger's seat display area corresponding to a passenger's seat area, in addition to the AVN display area and the cluster display area corresponding to a driver's seat area.

. Meanwhile, in case where the displays 180a to 180c of FIGS. 1B to 1D include an OLED panel, when displaying a plurality of objects apart from each other, the image display apparatus 100 according to an embodiment of the present disclosure controls, at a first time, a first object and a second object of the plurality of objects to be separated by a first distance and controls, at a second time after the first time, the first object and the second object to be separated by a second distance different from the first distance. Accordingly, it is possible to maintain balance between the objects in the image while reducing degradation. In particular, it is possible to suppress the occurrence of black areas when a process of reducing degradation is performed.

. FIG. 2 illustrates an outer appearance of an image display apparatus according to an embodiment of the present disclosure.

. The image display apparatus 100 according to an embodiment of the present disclosure may include a signal processing device 170 that performs signal processing to display an image, information, and the like on at least one of a plurality of displays 180 and 180h.

. Of the plurality of displays 180 and 180h, a first display 180 may be a cluster display for displaying a driving state and operation information, or an audio video navigation (AVN) display for displaying vehicle driving information, a navigation map, and various types of entertainment information or images.

. By contrast, a second display 180h may be a HUD display for displaying vehicle driving information.

. The signal processing device 170 may include therein a memory 508 and a processor 330 to control at least one of the plurality of displays 180 and 180h.

. Meanwhile, the signal processing device 170 may execute first to third virtual machines (not shown) on a hypervisor (not shown) in the processor 330.

. The first virtual machine (not shown), which is a server virtual machine, may control the second virtual machine (not shown) and the third virtual machine (not shown), which are guest virtual machines.

. Meanwhile, the second virtual machine may be referred to as a first guest virtual machine, and the third virtual machine may be referred to as a second guest virtual machine.

. The first guest virtual machine (not shown) may be operated for the first display 180, and the second guest virtual machine (not shown) may be operated for the second display 180h.

. Meanwhile, the server virtual machine (not shown) in the processor 330 may be configured to set the memory 508 based on the hypervisor (not shown) for transmission of the same data to the first guest virtual machine (not shown) and the second guest virtual machine (not shown). Accordingly, the first display 180 and the second display 180h in the vehicle may display the same information or the same image in a synchronized manner.

. Meanwhile, the server virtual machine (not shown) in the processor 330 may receive and process wheel speed sensor data of the vehicle so as to transmit the processed wheel speed sensor data to at least one of the first guest virtual machine (not shown) and the second guest virtual machine (not shown). Accordingly, at least one virtual machine may share the wheel speed sensor data of the vehicle.

. Thus, the plurality of displays 180 and 180h may be controlled using a single signal processing device 170.

. Meanwhile, one of the plurality of displays 180 and 180h may operate under a Linux-based operating system (OS), and the other may operate under a Web-based operating system (OS).

. In some embodiments, the signal processing device 170 may control the plurality of displays 180 and 180h operating under different operating systems (OS) to display the same information or the same image in a synchronized manner.

. FIG. 3 illustrates an example of an internal block diagram of an image display apparatus according to an embodiment of the present disclosure.

. Referring to FIG. 3, the image display apparatus 100 according to an embodiment of the present disclosure may include an input device 115, a transceiver 125, an interface 130, a memory 140, a signal processing device 170, a plurality of displays 180 and 180h, an audio output device 185, and a power supply 190.

. The input device 115 may include a physical button or pad for a button input or a touch input.

. Meanwhile, the input device 115 may include a microphone (not shown) for a user voice input.

. The transceiver 125 may wirelessly exchange data with a mobile terminal 800 or a server (not shown).

. In particular, the transceiver 125 may wirelessly exchange data with a mobile terminal of a vehicle driver. Any of various data communication schemes, such as Bluetooth, Wi-Fi, Wi-Fi Direct, and APIX, may be used as a wireless data communication scheme.

. The transceiver 125 may receive weather information and road traffic condition information, e.g., transport protocol expert group (TPEG) information, from the mobile terminal 800 or the server (not shown). To this end, the transceiver 125 may include a mobile communication module (not shown).

. The interface 130 may receive sensor information from an electronic control unit (ECU) 770 or a sensor device 760, and may transmit the received information to the signal processing device 170.

. Here, the sensor information may include at least one of vehicle traveling information, vehicle location information (global positioning system (GPS) information), vehicle angle information, vehicle speed information, vehicle acceleration information, vehicle tilt information, vehicle forward/backward movement information, battery information, fuel information, tire information, vehicle lamp information, in-vehicle temperature information, and in-vehicle humidity information.

. The sensor information may be acquired from a heading sensor, a yaw sensor, a gyro sensor, a position module, a vehicle forward/backward movement sensor, a wheel sensor, a vehicle speed sensor, a vehicle body tilt sensor, a battery sensor, a fuel sensor, a tire sensor, a steering wheel rotation sensor, an in-vehicle temperature sensor, or an in-vehicle humidity sensor. The position module may include a GPS module to receive GPS information.

. Meanwhile, the interface 130 may receive front-of-vehicle image data, side-of-vehicle image data, rear-of-vehicle image data, and obstacle-around-vehicle distance information from a camera 195 or a lidar (not shown), and may transmit the received information to the signal processing device 170.

. The memory 140 may store various data necessary for the overall operation of the image display apparatus 100, such as programs for processing or control of the signal processing device 170.

. For example, the memory 140 may store data regarding a hypervisor, a server virtual machine (not shown), and a plurality of guest virtual machines to be executed in the processor 330.

. The audio output device 185 may convert an electrical signal from the signal processing device 170 into an audio signal so as to output the audio signal. To this end, the audio output device 185 may include a speaker, etc.

. The power supply 190 may supply power required to operate components under the control of the signal processing device 170. In particular, the power supply 190 may receive power from a battery in the vehicle.

. The second display 180h, which is a HUD display, may include a picture generation device (not shown) to project an image, and may output an augmented reality-based object under the control of the signal processing device 170.

. For example, the HUD display 180h may output vehicle speed information, vehicle traveling direction information, a front vehicle object, a distance indicator showing a distance from a vehicle ahead, and the like.

. As another example, the HUD display 180h may output an augmented reality lane carpet, an augmented reality route carpet, or an augmented reality dynamic carpet corresponding to a road image.

. The signal processing device 170 may control the plurality of displays 180 and 180h.

. The signal processing device 170 may control the overall operation of each device or unit in the image display apparatus 100.

. For example, the signal processing device 170 may include a processor 330 configured to perform signal processing for the memory 508 and the display 180 for vehicle.

. The processor 330 may execute a hypervisor (not shown), and may execute a server virtual machine (not shown) and a plurality of guest virtual machines (not shown) on the executed hypervisor.

. Here, the first guest virtual machine (not shown) may be operated for the first display 180, and the second guest virtual machine (not shown) may be operated for the second display 180h.

. Meanwhile, the signal processing device 170 may process various signals, such as an audio signal, an image (or video) signal, and a data signal. To this end, the signal processing device 170 may be implemented in the form of a system on chip (SOC).

. Meanwhile, the image display apparatus 100 may further include a tuner 110 and a demodulator 120.

. The tuner 110 selects a radio frequency (RF) broadcast signal corresponding to a channel selected by a user or each of all pre-stored channels from among RF broadcast signals received through an antenna. The tuner 110 converts the selected RF broadcast signal into an intermediate frequency signal or a baseband video or audio signal.

. For example, when the selected RF broadcast signal is a digital broadcast signal, the tuner 110 converts it into a digital IF signal (DIF), whereas when the selected RF broadcast signal is an analog broadcast signal, the tuner 110 converts it into an analog baseband video or audio signal (CVBS/SIF).

. That is, the tuner 110 may process the digital broadcast signal or the analog broadcast signal. The analog baseband video or audio signal (CVBS/SIF) output from the tuner 110 may be directly input to the signal processing device 170.

. Meanwhile, in order to receive broadcast signals of a plurality of channels, the tuner 110 may include a plurality of tuners. Alternatively, the tuner 110 may be implemented as a single tuner capable of simultaneously receiving broadcast signals of a plurality of channels.

. The demodulator 120 receives and demodulates the digital IF signal (DIF) converted by the tuner 110.

. The demodulator 120 may perform demodulation and channel decoding to output a stream signal TS. Here, the stream signal TS may be a signal in which a video signal, an audio signal, and a data signal are multiplexed.

. The stream signal output from the demodulator 120 may be input to the signal processing device 170. The signal processing device 170 performs demultiplexing and video/audio signal processing, and then outputs an image and sound through the display 180 and the audio output device 185, respectively.

. FIG. 4 illustrates an example of an internal block diagram of a signal processing device of FIG. 3.

. Referring to FIG. 4, the signal processing device 170 according to an embodiment of the present disclosure may include a demultiplexer 310, an image processor 320, a processor 330, and an audio processor 370. The signal processing device 170 may further include a data processor (not shown).

. The demultiplexer 310 demultiplexes an input stream. For example, the demultiplexer 310 may demultiplex an MPEG-2 TS into an image signal, an audio signal, and a data signal. Here, the stream signal input to the demultiplexer 310 may be a stream signal output from the tuner 110, the demodulator 120, or the interface 130.

. The image processor 320 may perform signal processing on an input image. For example, the image processor 320 may perform image processing of an image signal demultiplexed by the demultiplexer 310.

. To this end, the image processor 320 may include a video decoder 325, a scaler 335, an image quality processor 635, a video encoder (not shown), a graphics processor 340, a frame rate converter 350, a formatter 360, etc.

. The video decoder 325 may decode the demultiplexed image signal, and the scaler 335 may perform scaling to allow the resolution of the decoded image signal to be displayed on the display 180.

. The video decoder 325 may include decoders of different standards. For example, the video decoder 325 may include an MPEG-2 decoder, an H.264 decoder, a 3D video decoder for a color image and a depth image, a decoder for multi-view images, and the like.

. The scaler 335 may scale an input image signal decoded by the video decoder 325 or the like.

. For example, when the size or resolution of an input image signal is small or low, the scaler 335 may upscale the input image signal, whereas when the size or resolution of an input image signal is large or high, the scaler 225 may downscale the input image signal.

. The image quality processor 635 may perform image quality processing on an input image signal decoded by the video decoder 325 or the like.

. For example, the image quality processor 635 may perform noise reduction processing on an input image signal, perform image resolution enhancement, process a high dynamic range (HRD)-based signal, convert a frame rate, or perform image quality processing suitable for the characteristics of a panel, particularly an OLED panel.

. The graphics processor 340 generates an OSD signal autonomously or according to a user input. For example, based on a user input signal, the graphics processor 340 may generate a signal for displaying various information as a graphic or a text on the screen of the display 180. The generated OSD signal may include various data such as a user interface screen of the image display apparatus 100, various menu screens, a widget, an icon, etc. In addition, the generated OSD signal may include a 2D object or a 3D object.

. The graphics processor 340 may generate a pointer that can be displayed on the display, based on a pointing signal input from a remote control device 200. In particular, such a pointer may be generated by a pointing signal processor, and the graphics processor 340 may include such a pointing signal processor (not shown). Alternatively, the pointing signal processor (not shown) may be provided separately, instead of being provided in the graphics processor 340.

. The frame rate converter (FRC) 350 may convert the frame rate of an input image. Alternatively, the FRC 350 may output an input image without any frame rate conversion.

. The formatter 360 may change the format of an input image signal to be suitable for being displayed on the display.

. In particular, the formatter 360 may change the format of an image signal to correspond to a display panel.

. Meanwhile, the formator 360 may change the format of an image signal.

. The processor 330 may control the overall operation of the image display apparatus 100 or the signal processing device 170.

. For example, the processor 330 may control the tuner 110 to tune an RF broadcast corresponding to a channel selected by a user or a pre-stored channel.

. In addition, the processor 330 may control the image display apparatus 100 in response to a user command input through a user input interface 150 or based on an internal program.

. Additionally, the processor 330 may control data transmission with a network interface 135 or an external device interface 130.

. Additionally, the processor 330 may control the operation of the demultiplexer 310 and the image processor 320 in the signal processing device 170.

. Meanwhile, the audio processor 370 in the signal processing device 170 may perform audio processing of a demultiplexed audio signal. To this end, the audio processor 370 may include various decoders.

. In addition, the audio processor 370 in the signal processing device 170 may perform bass, treble and volume adjustment, etc.

. The data processor (not shown) in the signal processing device 170 may perform data processing of a demultiplexed data signal. For example, when the demultiplexed data signal is an encoded data signal, the data processor may decode it. The encoded data signal may be electronic program guide (EPG) information including broadcasting information such as the start time and end time of broadcast programs aired on each channel.

. Meanwhile, the block diagram of the signal processing device 170 shown in FIG. 4 is merely illustrative. Respective components of the block diagram may be combined, added, or omitted according to a specification of the signal processing device 170 actually implemented.

. In particular, the FRC 350 and the formatter 360 may be provided separately, in addition to the image processor 320.

. Meanwhile, the signal processing device 170 according to the embodiment of the present disclosure may further include a neural network processor 333 for learning processing, etc.

. FIG. 5 is an internal block diagram of a display of FIG 3.

. Hereinafter, a description will be given based on the first display 180.

. Referring to FIG. 5, the display 180, which is OLED panel based, may include an organic light emitting diode (OLED) panel 210, a first interface 230, a second interface 231, a timing controller 232, a gate driver 234, a data driver 236, a memory 240, a power supply 290, a current detector 510, etc.

. The display 180 may receive an image signal Vd, a first DC power V1, and a second DC power V2, and may display a certain image based on the image signal Vd.

. Meanwhile, the first interface 230 in the display 180 may receive the image signal Vd and the first DC power V1 from the signal processing device 170.

. Here, the first DC power V1 may be used for the operation of the power supply 290 and the timing controller 232 in the display 180.

. Next, the second interface 231 may receive a second DC power V2 from an external power supply 190. Meanwhile, the second DC power V2 may be input to the data driver 236 in the display 180.

. Based on the image signal Vd, the timing controller 232 may output a data driving signal Sda and a gate driving signal Sga.

. For example, when the first interface 230 converts an input image signal Vd and outputs a converted image signal va1, the timing controller 232 may output a data driving signal Sda and a gate driving signal Sga based on the converted image signal va1.

. The timing controller 232 may further receive a control signal, a vertical synchronization signal Vsync, and the like, in addition to the image signal Vd from the signal processing device 170.

. Based on the control signal, the vertical synchronization signal Vsync, and the like, in addition to the image signal Vd, the timing controller 232 may output a gate driving signal Sga for the operation of the gate driver 234 and a data driving signal Sda for the operation of the data driver 236.

. In this case, when the OLED panel 210 includes RGB subpixels, the data driving signal Sda may be a data driving signal for driving the RGB subpixels.

. Meanwhile, when the OLED panel 210 includes RGBW subpixels, the data driving signal Sda may be a data driving signal for driving the RGBW subpixels.

. Meanwhile, the timing controller 232 may further output a control signal Cs to the gate driver 234.

. The gate driver 234 and the data driver 236 supply a scan signal and a data signal to the OLED panel 210 through a gate line GL and a data line DL, respectively, according to the gate driving signal Sga and the data driving signal Sda from the timing controller 232. This allows the OLED panel 210 to display a certain image.

. Meanwhile, the OLED panel 210 may include an organic light emitting layer. In order to display an image, a plurality of gate lines GL and data lines DL may be disposed in a matrix form in each pixel corresponding to the organic light emitting layer.

. Meanwhile, since a scan signal is input to the gate line GL, the gate line GL may also be referred to as a scan line.

. Meanwhile, the data driver 236 may output a data signal to the OLED panel 210 based on the second DC power V2 from the second interface 231.

. The power supply 290 may supply various power supplies to the gate driver 234, the data driver 236, the timing controller 232, and the like.

. The current detector 510 may detect the current flowing in subpixels of the OLED panel 210. The detected current may be input to the processor 270 or the like, for a cumulative current calculation.

. Meanwhile, the timing controller 232, the gate driver 234, the data driver 236, and the memory 240 in the figure may be implemented as a single integrated circuit (IC).

. Therefore, the timing controller 232, the gate driver 234, the data driver 236, and the memory 240 may be referred to as a driving or drive controller 285.

. Meanwhile, the driving controller 285 may include a buffer (not shown) to store frame data.

. In particular, the timing controller 232 in the driving controller 285 may output a gate driving signal and a data driving signal based on the frame data stored in the buffer (not shown) or the memory 240.

. The timing controller 232 or the driving controller 285 may perform various types of control in the display 180. For example, the timing controller 232 or the driving controller 285 may control the gate driver 234, the data driver 236, the timing controller 232, etc.

. Meanwhile, the timing controller 232 or the driving controller 285 may receive information of the current flowing through subpixels of the OLED panel 210 from the current detector 510.

. Based on the current information flowing through the subpixels of the OLED panel 210, the timing controller 232 or the driving controller 285 may calculate the accumulated current of each subpixel of the OLED panel 210. The calculated accumulated current may be stored in the memory 240.

. Meanwhile, when the accumulated current of each subpixel of the OLED panel 210 is greater than or equal to an allowable value, the timing controller 232 or the driving controller 285 may determine that it is burn-in.

. For example, when the accumulated current of each subpixel of the OLED panel 210 is greater than or equal to 300000 A, the timing controller 232 or the driving controller 285 may determine that a corresponding subpixel is a burn-in subpixel.

. Meanwhile, when the accumulated current of a subpixel, among the subpixels of the OLED panel 210, is close to an allowable value, the timing controller 232 or the driving controller 285 may determine that the corresponding subpixel is a subpixel likely to cause burn-in.

. Meanwhile, based on the current detected by the current detector 510, the timing controller 232 or the driving controller 285 may determine that a subpixel having the greatest accumulated current is a subpixel likely to cause burn-in.

. Meanwhile, regardless of the operation of the current detector 510, the timing controller 232 or the driving controller 285 may predict information of the current that will flow through the subpixels based on the image signal from the signal processing device 170, and may determine or identify, based on the predicted current information, a subpixel likely to cause burn-in.

. Alternatively, based on the image signal, the signal processing device 170 may predict information of the current that will flow through the subpixels, and may determine or identify, based on the predicted current information, a subpixel likely to cause burn-in.

. FIGS. 6A to 6D are diagrams for explaining an OLED panel of FIG. 5.

. FIG. 6A illustrates an example of a pixel in the OLED panel 210.

. Referring to FIG. 6A, the OLED panel 210 may include a plurality of scan lines Scan 1 to Scan n and a plurality of data lines R1, G1, B1 to Rm, Gm, Bm intersecting the scan lines.

. Meanwhile, a pixel (subpixel) is defined at an intersecting area of the scan line and the data line in the OLED panel 210. In FIG. 6A, a pixel including RGB subpixels SR1, SG1, and SB1 is shown.

. The RGB subpixels SR1, SG1, and SB1 are respectively provided with a red organic light emitting diode, a green organic light emitting diode, and a blue organic light emitting diode.

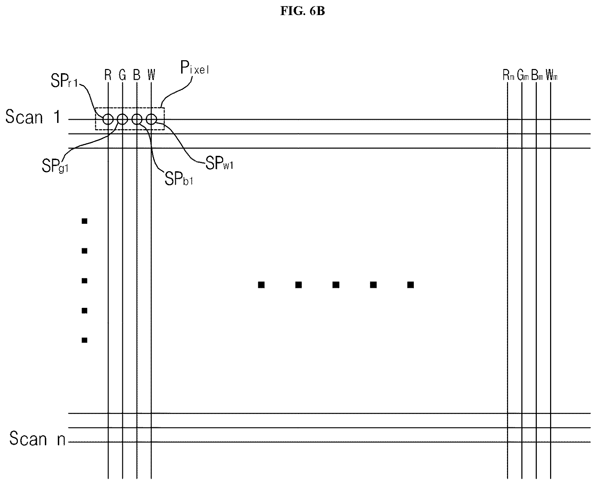

. FIG. 6B illustrates another example of a pixel in the OLED panel 210.

. Referring to FIG. 6B, the OLED panel 210 may include a plurality of scan lines Scan 1 to Scan n and a plurality of data lines R1, G1, B1, W1 to Rm, Gm, Bm, Wm intersecting the scan lines.

. Meanwhile, a pixel (subpixel) is defined at an intersecting area of the scan line and the data line in the OLED panel 210. In FIG. 6B, a pixel including RGBW subpixels SR1, SG1, SB1, and SW1 is shown.

. The RGBW subpixels SR1, SG1, SB1, and SW1 are respectively provided with a red organic light emitting diode, a green organic light emitting diode, a blue organic light emitting diode, and a white organic light emitting diode.

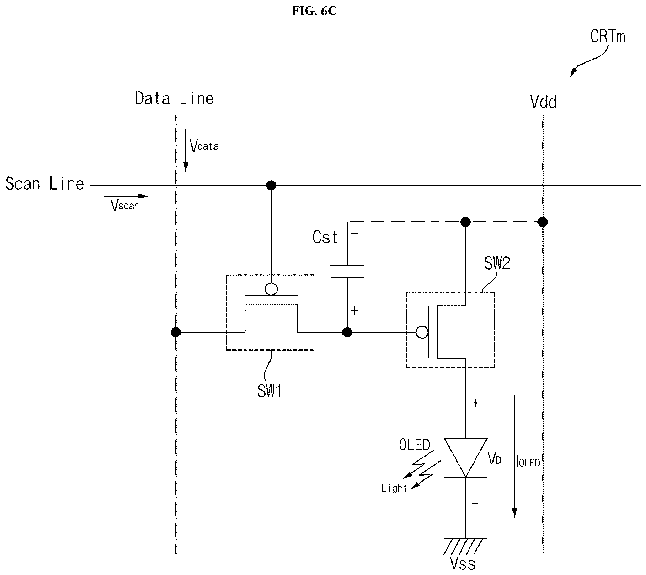

. FIG. 6C illustrates an example of a circuit of a subpixel in the pixel of the OLED panel of FIG. 6A or FIG. 6B.

. Referring to FIG. 6C, a subpixel circuit CRTm, which is an active type, may include a scan switching element SW1, a storage capacitor Cst, a drive switching element SW2, and an organic light emitting layer OLED.

. The scan switching element SW1 is turned on in response to an input scan signal Vdscan, as a scan line is connected to a gate terminal. When it is turned on, an input data signal Vdata is transmitted to a gate terminal of the drive switching element SW2 or one end of the storage capacitor Cst.

. The storage capacitor Cst is provided between the gate terminal and the source terminal of the drive switching element SW2, and stores a predetermined difference between a level of data signal transmitted to one end of the storage capacitor Cst and a level of DC voltage Vdd transmitted to the other end of the storage capacitor Cst.

. For example, when data signals have different levels according to a Pulse Amplitude Modulation (PAM) method, the level of power stored in the storage capacitor Cst varies according to a difference in the level of the data signal Vdata.

. As another example, when data signals have different pulse widths according to a Pulse Width Modulation (PWM) method, the level of power stored in the storage capacitor Cst varies according to a difference in the pulse width of the data signal Vdata.

. The drive switching element SW2 is turned on according to the power level stored in the storage capacitor Cst. When the drive switching element SW2 is turned on, a driving current IOLED, which is proportional to the stored power level, flows through the organic light emitting layer OLED. Accordingly, the organic light emitting layer OLED performs a light emitting operation.

. The organic light emitting layer OLED may include a light emitting layer (EML) corresponding to a subpixel, and may include at least one of a hole injection layer (HIL), a hole transport layer (HTL), an electron transport layer (ETL), and an electron injection layer (EIL). In addition, it may further include a hole blocking layer, etc.

. Meanwhile, in FIG. 6C, it is illustrated that a p-type MOSFET is used for the scan switching element SW1 and the drive switching element SW2, but an n-type MOSFET or any of other switching elements, such as a JFET, IGBT, SIC, or the like, is also available.

. Meanwhile, the pixel is a hold-type element that continuously emits light in the organic light emitting layer OLED, after a scan signal is applied, during a unit display period, specifically, during a unit frame.

. Meanwhile, the subpixel circuit CRTm of FIG. 6C is driven by an active-matrix scheme.

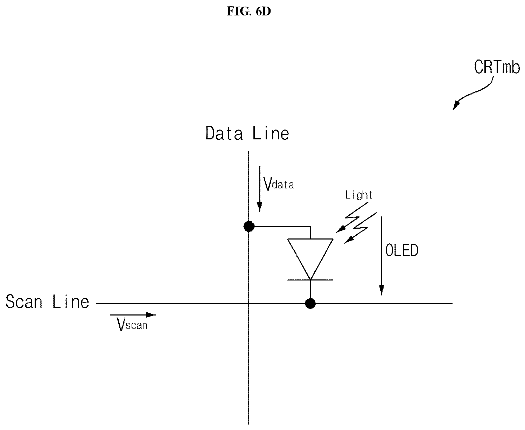

. FIG. 6D illustrates another example of a circuit in a subpixel in the pixel of the OLED panel of FIG. 6A or FIG. 6B.

. Referring to FIG. 6D, an organic light emitting subpixel circuit CRTm, which is a passive type, may only include an organic light emitting diode OLED, without a separate switching element.

. As shown in FIG. 6D, an anode of the organic light emitting diode OLED may be connected to a data line to receive a data signal Vdata, and a cathode of the organic light emitting diode OLED may be connected to a scan line to receive a scan signal Vscan.

. Meanwhile, the organic light emitting diode may emit light in an organic way or in an inorganic way using a plurality of subframes based on a passive-matrix scheme.

. Meanwhile, unlike FIG. 6D, the anode of the organic light emitting diode OLED may be connected to the scan line to receive the scan signal Vscan, and the cathode of the organic light emitting diode OLED may be connected to the data line to receive the data signal Vdata.

. Meanwhile, the subpixel circuit CRTm of FIG. 6D is driven by a passive-matrix scheme.

. FIGS. 7A and 7B are diagrams for explaining an image display apparatus related to the present disclosure.

. FIGS. 7A illustrates an example of a pixel shift in an image display apparatus related to the present disclosure.

. Referring toFIG. 7A, the image display apparatus related to the present disclosure may shift or move pixel data in an image in a first direction so as to reduce afterimage or image retention.

. For example, the first direction may be the rightward direction, as shown in (a) of FIG. 7A.

. That is, in order to reduce image retention, the image display apparatus related to the present disclosure may shift pixel data in an image in the rightward direction.

. As another example, the first direction may be the upward direction, as shown in (b) of FIG. 7A.

. That is, in order to reduce image retention, the image display apparatus related to the present disclosure may shift pixel data in an image in the upward direction.

. Meanwhile, as shown in (a) of FIG. 7A, when shifting the pixel data in the image in the rightward direction, the entire image is moved rightward, which causes a black area on a left edge of the screen.

. Meanwhile, as shown in (b) of FIG. 7A, when shifting the pixel data in the image in the upward direction, the entire image is moved upward, which causes a black area on a lower edge of the screen.

. FIG. 7B illustrates an example of a pixel shift for reducing afterimage or image retention in a cluster image displayed in an image display apparatus related to the present disclosure.

. Referring to FIG. 7B, the image display apparatus related to the present disclosure may display a cluster image 710 including vehicle driving speed information and the like, as shown in (a) of FIG. 7B.

. Here, the cluster image 710 may include a plurality of objects 705 and 708.

. Meanwhile, in order to reduce image retention, the image display apparatus related to the present disclosure may display a cluster image 710b by moving it in the rightward direction, as shown in (b) of FIG. 7B.

. Meanwhile, in order to reduce image retention, the image display apparatus related to the present disclosure may display a cluster image 710c by moving it in the leftward direction, as shown in (c) of FIG. 7B.

. Meanwhile, in order to reduce image retention, the image display apparatus related to the present disclosure may display a cluster image 710d by moving it in the downward direction, as shown in (d) of FIG. 7B.

. Meanwhile, in order to reduce image retention, the image display apparatus related to the present disclosure may display a cluster image 710e by moving it in the upward direction, as shown in (e) of FIG. 7B.

. Meanwhile, as in the case of (b) to (e) of FIG. 7B, when shifting pixel data in the image in a first direction, the entire image is moved in the first direction, which in turn causes the occurrence of black areas in an area opposite to the shift direction.

. Furthermore, since the entire image is moved while a user is viewing it, the user may feel a sense of incongruity or discomfort when watching the image.

. Therefore, in order to address this problem, the present disclosure provides a method that can maintain balance between objects in an image while reducing degradation. In particular, a method of suppressing the occurrence of black areas when a process (or mode) of reducing degradation is performed. This will be described below with reference to FIG. 8 and subsequent figures.

. FIG. 8 is an example of an internal block diagram of a signal processing device according to an embodiment of the present disclosure.

. Referring to FIG. 8, the signal processing device 170 according to an embodiment of the present disclosure outputs an image signal to the display 180.

. When displaying a plurality of objects apart from each other, the signal processing device 170 according to the embodiment of the present disclosure may be configured to separate, at a first time T1 (see FIG. 10A), a first object OBa (see FIG. 10A) and a second object OBb (see FIG. 10A) of the plurality of objects by a first distance Da (see FIG. 10A) and separate, at a second time T2 (see FIG. 10A) after the first time T1, the first object OBa and the second object OBb by a second distance Db (see FIG. 10A) different from the first distance Da. Accordingly, it is possible to maintain balance between the objects in the image while reducing degradation. In particular, it is possible to suppress the occurrence of black areas when a process of reducing degradation is performed.

. To this end, the signal processing device 170 according to the embodiment of the present disclosure may include an object detector 810 to detect an object in an input image and an object mover 820 to move at least part of the detected object.

. For example, the object detector 810 may detect a plurality of objects in an input image.

. More specifically, based on learning processing performed by the neural network processor 333, the object detector 810 may detect a plurality of objects in an input image.

. Then, the object mover 820 may be configured to move at least some of the plurality of objects in a plurality of directions, instead of in one direction.

. For example, the object mover 820 may be configured to move a first object OBa among the plurality of objects in a first direction and move a second object OBb in a second direction different from the first direction. Accordingly, it is possible to maintain balance between the objects in the image while reducing degradation.

. As another example, the object mover 820 may be configured to control an area including a first object OBa and a second object OBb of the plurality of objects to be zoomed in or zoomed out.

. The zoom-in or zoom-out causes the first object OBa and the second OBb to move in a first direction and a second direction, respectively. Accordingly, it is possible to maintain balance between the objects in the image while reducing degradation.

. FIG. 9 is a flowchart illustrating the operation of an image display apparatus according to one embodiment of the present disclosure.

. Referring to FIG. 9, the signal processing device 170 in the image display apparatus 100 according to one embodiment of the present disclosure may be configured to determine whether it is in an afterimage reduction mode (S910) and, based on a determination that it is in the afterimage reduction mode, separate, at a first time T1, a first object OBa and a second object OBb of a plurality of objects by a first distance Da (S920).

. Next, the signal processing device 170 may be configured to separate, at a second time T2 after the first time T1, the first object OBa and the second object OBb by a second distance Db different from the first distance Da (S930).

. For example, when displaying the plurality of objects, the signal processing device 170 may be configured to separate, at a second time T2 after the first time T1, the first object OBa and the second OBb by a second distance Db greater than the first distance Da.

. Meanwhile, at the second time T2, the signal processing device 170 may be configured to move the first object OBa in a first direction and move the second object OBb in a second direction different from the first direction.

. More specifically, at the second time T2, the signal processing device 170 may be configured to move the first object OBa in a first direction and move the second object OBb in a second direction opposite to the first direction.

. Thus, it is possible to maintain balance between the objects in the image while reducing degradation. In particular, as the first object OBa and the second object OBb are moved in different directions, instead of in one direction (i.e., the same direction), it is possible to suppress the occurrence of black areas.

. FIGS. 10A to 11D are diagrams for explaining FIG. 9.

. FIG. 10A illustrates an example of an image 1005 at a first time and an image 1005b at a second time.

. Referring to FIG. 10A, the signal processing device 170 according to an embodiment of the present disclosure may be configured to separate, at a first time T1, a first object OBa and a second object OBb of a plurality of objects by a first distance Da, as shown in (a) of FIG. 10A.

. Next, the signal processing device 170 according to the embodiment of the present disclosure may be configured to separate, at a second time T2 after the first time T1, the first object OBa and the second object OBb by a second distance Db different from the first distance Da, as shown in (b) of FIG. 10A.

. In FIG. 10A, it is illustrated that the second distance Db is greater than the first distance Da.

. Thus, it is possible to maintain balance between the objects in the image while reducing degradation. In particular, it is possible to suppress the occurrence of black areas when a process of reducing degradation is performed.

. For example, at the second time T2, the signal processing device 170 may be configured to move the first object OBa in the leftward direction, which is a first direction, and move the second object OBb in the rightward direction, which is a second direction different from the first direction.

. As the first object OBa and the second object OBb are moved in different directions, instead of in the same direction, it is possible to suppress the occurrence of black areas. Further, it is possible to maintain balance between the objects in the image while reducing degradation such as image retention.

. Meanwhile, at the second time T2, when the first object OBa and the second object OBb are separated by the second distance Db different from the first distance Da, the signal processing device 170 according to the embodiment of the present disclosure may be configured to control the size of the first object OBa and the second object OBb to remain unchanged.

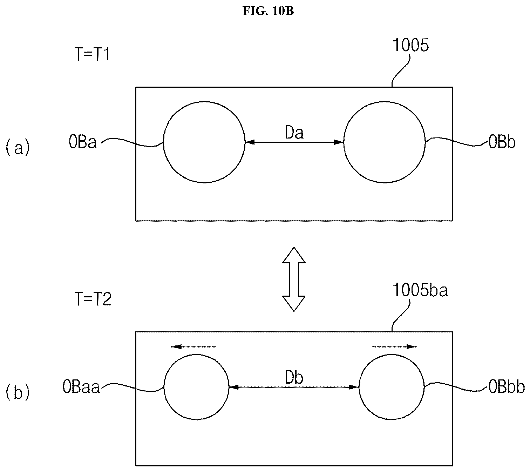

. FIG. 10B illustrates another example of an image 1005 at a first time and an image 1005ba at a second time.

. Referring to FIG. 10B, the signal processing device 170 according to an embodiment of the present disclosure may be configured to separate, at a first time T1, a first object OBa and a second object OBb of a plurality of objects by a first distance Da, as shown in (a) of FIG. 10B.

. Next, the signal processing device 170 according to the embodiment of the present disclosure may be configured to separate, at a second time T2 after the first time T1, the first object OBaa and the second object OBba by a second distance Db different from the first distance Da.

. In FIG. 10B, it is illustrated that the second distance Db is greater than the first distance Da.

. Here, as shown in (b) of FIG. 10B, the signal processing device 170 may be configured to control the size of the first object OBaa and the second object OBba displayed at the second time T2 to be less than the size of the first object OBa and the second object OBb displayed at the first time T1.

. In other words, (b) of FIG. 10B may be zoomed out relative to (a) of FIG. 10B. Accordingly, it is possible to maintain balance between the objects in the image while reducing degradation. In particular, it is possible to suppress the occurrence of black areas when a process of reducing degradation is performed.

. Meanwhile, unlike (b) of FIG. 10B, the signal processing device 170 may be configured to control the size of the first object OBaa and the second object OBba displayed at the second time T2 to be greater than the size of the first object OBa and the second object OBb displayed at the first time T1.

. Thus, as the size of the first object OBaa and the second object OBba increases in proportion to the distance, it is possible to maintain balance between the plurality of objects in the image 1005ba at the second time.

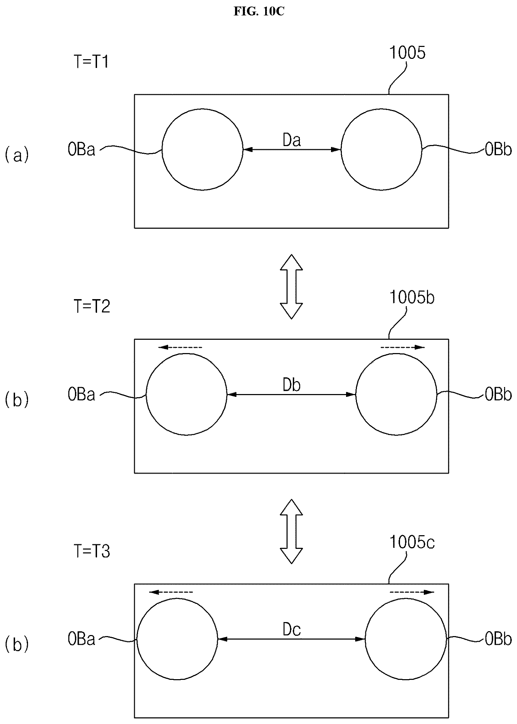

. FIG. 10C illustrates an example of an image 1005 at a first time, an image 1005b at a second time, and an image 1005c at a third time.

. Referring to FIG. 10C, the signal processing device 170 according to an embodiment of the present disclosure may be configured to separate, at a first time T1, a first object OBa and a second object OBb of a plurality of objects by a first distance Da, as shown in (a) of FIG. 10C.

. Next, the signal processing device 170 according to the embodiment of the present disclosure may be configured to separate, at a second time T2 after the first time T1, the first object OBa and the second object OBb by a second distance Db different from the first distance Da, as shown in (b) of FIG. 10C.

. Next, the signal processing device 170 according to the embodiment of the present disclosure may be configured to separate, at a third time T3 after the second time T2, the first object OBa and the second object OBb by a third distance Dc different from the second distance Db, as shown in (c) of FIG. 10C.

. In FIG. 10C, it is illustrated that the second distance Db is greater than the first distance Da, and the third distance Dc is greater than the second distance Db.

. For example, at the second time T2, the signal processing device 170 may be configured to move the first object OBa in the leftward direction, which is a first direction, and move the second object OBb in the rightward direction, which is a second direction different from the first direction.

. Then, at the third time T3, the signal processing device 170 may be configured to move the first object OBa further in the leftward direction, which is the first direction, and move the second object OBb further in the rightward direction, which is the second direction different to the first direction.

. Thus, it is possible to maintain balance between the objects in the image while reducing degradation. In particular, it is possible to suppress the occurrence of black areas when a process of reducing degradation is performed.

. Meanwhile, the signal processing device 170 according to the embodiment of the present disclosure may be configured to control the size of the first object OBa and the second object OBb to remain unchanged at the second time T2 and the third time T3.

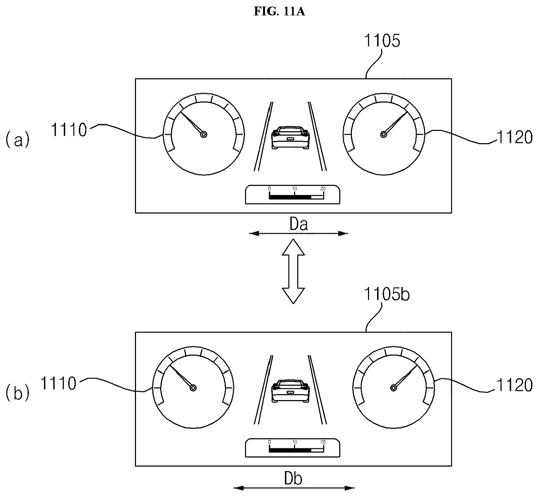

. FIG. 11A illustrates an example of a cluster image 1105 at a first time and a cluster image 1105b at a second time.

. Referring to FIG. 11A, the signal processing device 170 according to an embodiment of the present disclosure may be configured to separate, at a first time T1, a first object 1110 and a second object 1120 of a plurality of objects in the cluster image 1105 by a first distance Da, as shown in (a) of FIG. 11A.

. Here, the first object 1110 may include speed information, and the second object 1120 may include RPM (revolutions per minute) information.

. Next, the signal processing device 170 according to the embodiment of the present disclosure controls, at a second time T2 after the first time T1, the first object 1110 and the second object 1120 in the cluster image 1105b to be separated by a second distance Db different from the first distance Da, as shown in (b) of FIG. 11A.

. In FIG. 11A, it is illustrated that the second distance Db is greater than the first distance Da.

. For example, at the second time T2, the signal processing device 170 may be configured to move the first object 1110 in the leftward direction, which is a first direction, and move the second object 1120 in the rightward direction, which is a second direction different from the first direction.

. As the first object 1110 and the second object 1120 are moved in different directions, instead of in the same direction, it is possible to suppress the occurrence of black areas. Further, it possible to maintain balance between the objects in the image while reducing degradation such as image retention.

. Meanwhile, at the second time T2, when the first object 1110 and the second object 1120 are separated by the second distance Db different from the first distance Da, the signal processing device 170 according to the embodiment of the present disclosure may be configured to control the size of the first object 1110 and the second object 1120 to remain unchanged.

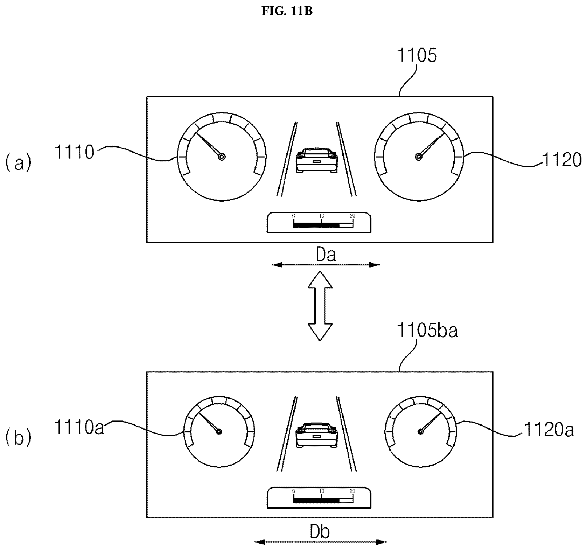

. FIG. 11B illustrates another example of a cluster image 1105 at a first time and a cluster image 1105ba at a second time.

. Referring to FIG. 11B, the signal processing device 170 according to an embodiment of the present disclosure may be configured to separate, at a first time T1, a first object 1110 and a second object 1120 of a plurality of objects in the cluster image 1105 by a first distance Da, as shown in (a) of FIG. 11B.

. Next, the signal processing device 170 according to the embodiment of the present disclosure may be configured to separate, at a second time T2 after the first time T1, the first object 1110a and the second object 1120a in the cluster image 1105ba by a second distance Db different from the first distance Da.

. In FIG. 11B, it is illustrated that the second distance Db is greater than the first distance Da.

. Here, as shown in (b) of FIG. 11B, the signal processing device 170 may be configured to control the size of the first object 1110a and the second object 1120a in the cluster image 1105ba displayed at the second time T2 to be less than the size of the first object 1110 and the second object 1120 in the cluster image 1105 displayed at the first time T1.

. In other words, (b) of FIG. 11B may be zoomed out relative to (a) of FIG. 11B. Accordingly, it is possible to maintain balance between the objects in the image while reducing degradation. In particular, it is possible to suppress the occurrence of black areas when a process of reducing degradation is performed.

. Meanwhile, unlike (b) of FIG. 11B, the signal processing device 170 may control the size of the first object 1 1 10a and the second object 1120a displayed at the second time T2 to be greater than the size of the first object 1110 and the second object 1120 displayed at the first time T1.

. Thus, as the size of the first object 1110a and the second object 1120a increases in proportion to the distance, it is possible to maintain balance between the plurality of objects in the image 1105ba at the second time.

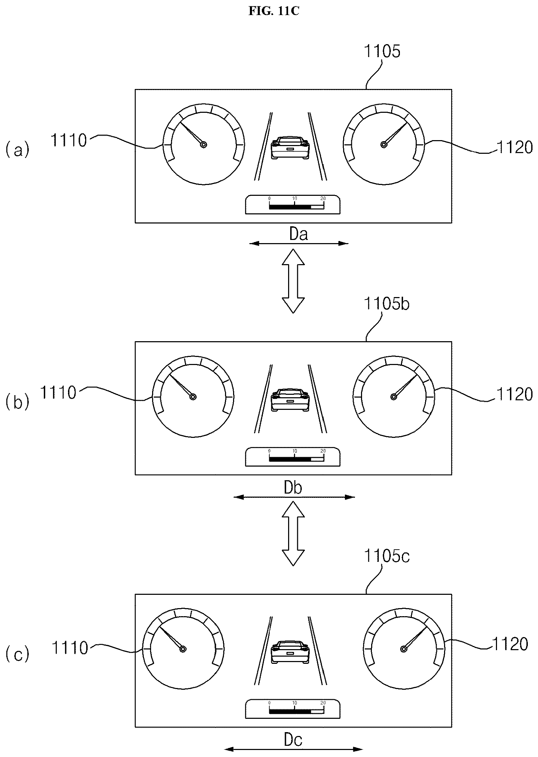

. FIG. 11C illustrates an example of a cluster image 1105 at a first time, a cluster image 1105b at a second time, and a cluster image 1105c at a third time.

. Referring to FIG. 11C, the signal processing device 170 according to an embodiment of the present disclosure may be configured to separate, at a first time T1, a first object 1110 and a second object 1120 of a plurality of objects in the cluster image 1105 by a first distance Da, as shown in (a) of FIG. 11C.

. Next, the signal processing device 170 according to the embodiment of the present disclosure c may be configured to separate, at a second time T2 after the first time T1, the first object 1110 and the second object 1120 in the cluster image 1105b by a second distance Db different from the first distance Da, as shown in (b) of FIG. 11C.

. Next, the signal processing device 170 according to the embodiment of the present disclosure may be configured to separate, at a third time T3 after the second time T2, the first object 1110 and the second object 1120 in the cluster image 1105c by a third distance Dc different from the second distance Db, as shown in (c) of FIG. 11C.

. Thus, it is possible to maintain balance between the objects in the image while reducing degradation. In particular, it is possible to suppress the occurrence of black areas when a process of reducing degradation is performed.

. Meanwhile, the signal processing device 170 according to the embodiment of the present disclosure may be configured to control the size of the first object 1110 and the second object 1120 to remain unchanged at the second time T2 and the third time T3.

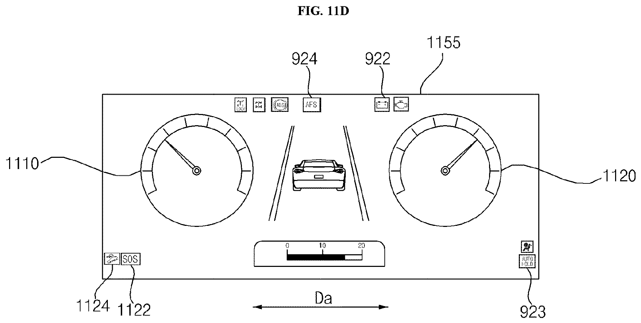

. FIG. 11D illustrates another example of a cluster image 1155.

. As shown in FIG. 11D, the signal processing device 170 according to an embodiment of the present disclosure may be configured to display the cluster image 1155 including a first object 1110, a second object 1120, and a plurality of icons 922, 923, 924, 1122, and 1124 at a first time T1.

. In this case, the first object 1110 and the second object 1120 may be separated by a first distance Da.

. Meanwhile, the first object 1110 may include speed information, and the second object 1120 may include RPM (revolutions per minute) information.

. Meanwhile, the plurality of icons 922, 923, 924, 1122, and 1124 may correspond to vehicle warning icons or vehicle warning images.

. For example, of the plurality of icons 922, 923, 924, 1122, and 1124, a first icon 922 may correspond to a battery information icon, a second icon 923 may correspond to an Auto Hold icon, a third icon 924 may correspond to an AFS (Adaptive Front Lighting System) icon, a fourth icon 1122 may correspond to an SOS information icon, and a fifth icon 1124 may correspond to an HDC (Hill Descent Control) icon.

. Meanwhile, the signal processing device 170 may be configured to display at least one of a steering wheel icon, an ABS (Anti-Lock Braking System) icon, an airbag icon, an ESP (Electronic Stability Program) OFF icon, an ESC (Electronic Stability Control) icon, an EPB (Electronic Parking Brake) icon, a door icon, a seatbelt icon, an engine icon, a DPF (Diesel Particulate Filter) icon, a 4WD (Four-Wheel Drive) icon, a tail light icon, a low beam headlight icon, a high beam headlight icon, or an HDC (Hill Descent Control) icon in the cluster image 1155.

. Meanwhile, the signal processing device 170 may be configured to separate, at a second time T2, the first object 1110 and the second object 1120 by a second distance Db greater than the first distance Da.

. In this case, at the second time T2, the signal processing device 170 may be configured to move an icon adjacent to the first object 1110 in a first direction and move an icon adjacent to the second object 1120 in a second direction different from the first direction.

. For example, at the second time T2, the signal processing device 170 may be configured to move the fourth icon 1122 and the fifth icon 1124 adjacent to the first object 1110 in the leftward direction and move the second icon 923 adjacent to the second object 1120 in the rightward direction. Accordingly, it is possible to maintain balance between the objects and the icons in the image while reducing degradation.

. FIG. 12 is a flowchart illustrating the operation of an image display apparatus according to another embodiment of the present disclosure.

. Referring to FIG. 12, the signal processing device 170 in the image display apparatus 100 according to another embodiment of the present disclosure may be configured to determine whether it is in an afterimage reduction mode (S910), based on a determination that it is in the afterimage reduction mode, separate a first object OBa and a second object OBb of a plurality of objects by a first distance Da at a first time T1 (S920), and separate a third object OBc and a fourth object OBd of the plurality of objects to be separated at the first time T1 (S922).

. Next, the signal processing device 170 according to the embodiment of the present disclosure may be configured to separate, at a second time T2 after the first time T1, the first object OBa and the second object OBb by a second distance Db different from the first distance Da (S930) and separate, at the second time T2, the third object OBc and the fourth object OBd by a distance different from the distance at the first time T1 (S932).

. For example, when displaying the plurality of objects, the signal processing device 170 may be configured to separate, at a second time T2 after the first time T1, the first object OBa and the second object OBb by the second distance Db greater than the first distance Da.

. Meanwhile, when displaying the plurality of objects, the signal processing device 170 may be configured to separate, at the first time T1, the third object OBc and the fourth object OBd of the plurality of objects by a third distance D1, and may be configured to separate, at the second time T2, the third object OBc and the fourth object OBd by a fourth distance D2 different from the third distance D1.

. For example, when displaying the plurality of objects, the signal processing device 170 may be configured to separate, at the first time T1, the third object OBc and the fourth object OBd of the plurality of objects by a third distance D1, and may be configured to separate, at the second time T2, the third object OBc and the fourth object OBd by a fourth distance D2 greater than the third distance D1.

. Meanwhile, at the second time T2, the signal processing device 170 may be configured to move the first object OBa in a first direction and move the second object OBb in a second direction different from the first direction.

. More specifically, at the second time T2, the signal processing device 170 may be configured to move the first object OBa in a first direction and move the second object OBb in a second direction opposite to the first direction.

. Thus, it is possible to maintain balance between the objects in the image while reducing degradation. In particular, as the first object OBa and the second object OBb are moved in different directions, instead of in the same direction, it is possible to suppress the occurrence of black areas.

. Meanwhile, at the second time T2, the signal processing device 170 may be configured to move the third object OBc in a third direction and move the fourth object OBd in a fourth direction different from the third direction.

. More specifically, at the second time T2, the signal processing device 170 may be configured to move the third object OBc in a third direction and move the fourth object OBd in a fourth direction opposite to the third direction.

. Thus, it is possible to maintain balance between the objects in the image while reducing degradation. In particular, as the third object OBc and the fourth object OBd are moved in different directions, instead of in the same direction, it is possible to suppress the occurrence of black areas.

. FIGS. 13A to 14C are diagrams for explaining FIG. 12.

. FIG. 13A illustrates yet another example of an image 1005 at a first time and an image 1005b at a second time.

. Referring to FIG. 13A, the signal processing device 170 according to an embodiment of the present disclosure may be configured to separate, at a first time T1, a first object OBa and a second object OBb of a plurality of objects by a first distance Da and a third object OBc and separate a fourth object OBd of the plurality of objects by a third distance D1, as shown in (a) of FIG. 13A.

. For example, the first object OBa and the second object OBb may be horizontally apart by the first distance Da, and the third object OBc and the fourth object OBd may be vertically apart by the third distance D1.

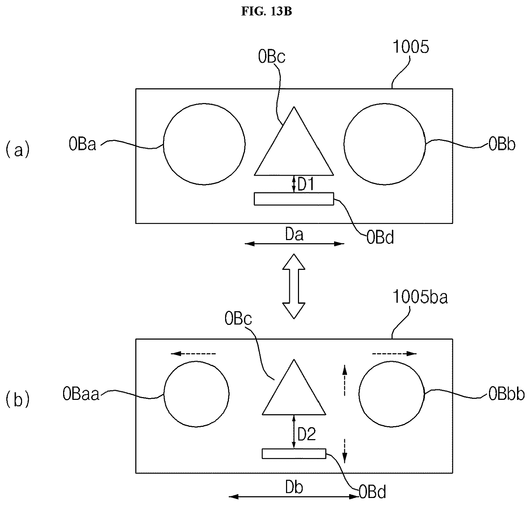

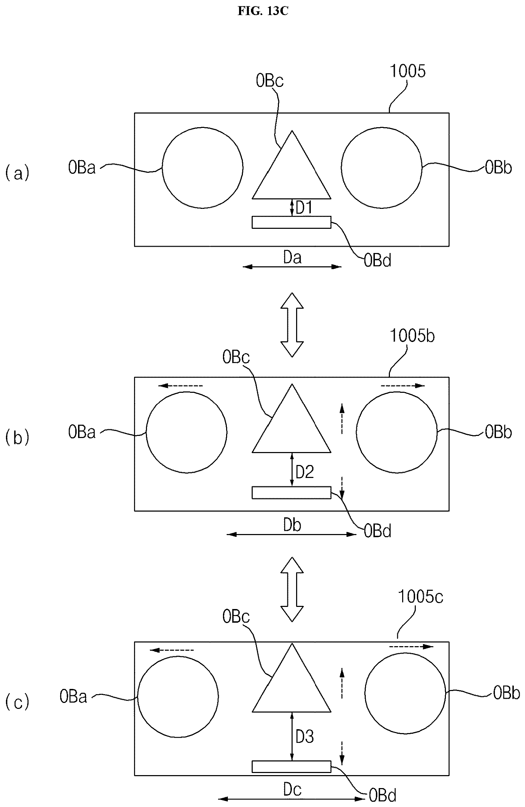

. Next, as shown in (b) of FIG. 13, the signal processing device 170 according to the embodiment of the present disclosure may be configured to separate, at a second time T2 after the first time T1, the first object OBa and the second object OBb by a second distance Db different from the first distance Da and the third object OBc and separate the fourth object OBd by a fourth distance D2 different from the third distance D1.

. In FIG. 13A, it is illustrated that the second distance Db is greater than the first distance Da, and the fourth distance D2 is greater than the third distance D1.

. Thus, it is possible to maintain balance between the objects in the image while reducing degradation. In particular, it is possible to suppress the occurrence of black areas when a process of reducing degradation is performed.

. For example, at the second time T2, the signal processing device 170 may be configured to move the first object OBa in the leftward direction, which is a first direction, move the second object OBb in the rightward direction, which is a second direction different from the first direction, move the third object OBc in the upward direction, which is a third direction, and move the fourth object OBd in the downward direction, which is a fourth direction different from the third direction.

. As the first object OBa, the second object OBb, the third object OBc, and the fourth object OBd are moved in different directions, instead of in the same direction, it is possible to suppress the occurrence of black areas. Further, it is possible to maintain balance between the objects in the image while reducing degradation such as image retention.

. Meanwhile, at the second time T2, when the third object OBc and the fourth object OBd are separated by the fourth distance D2 different from the third distance D1, the signal processing device 170 according to the embodiment of the present disclosure may control the size of the third object OBc and the fourth object OBd to remain unchanged.

. FIG. 13B illustrates yet another example of an image 1005 at a first time and an image 1005ba at a second time.

. Referring to FIG. 13B, the signal processing device 170 according to an embodiment of the present disclosure may be configured to separate, at a first time T1, a first object OBa and a second object OBb of a plurality of objects by a first distance Da and a third object OBc and separate a fourth object OBd of the plurality of objects by a third distance D1, as shown in (a) of FIG. 13B.

. Next, the signal processing device 170 according to the embodiment of the present disclosure may be configured to separate, at a second time T2 after the first time T1, the first object OBaa and the second object OBba by a second distance Db different from the first distance Da and the third object OBc and separate the fourth object OBd by a fourth distance D2 different from the third distance D1.

. In this case, as shown in (b) of FIG. 13B, the signal processing device 170 may control the size of the first object OBaa and the second object OBba displayed at the second time T2 to be less than the size of the first object OBa and the second object OBb displayed at the first time T1.

. Meanwhile, the signal processing device 170 may be configured to control the size of the third object OBc and the fourth object OBd displayed at the second time T2 to be less than the size of the third object OBc and the fourth object OBd displayed at the first time T1.

. In other words, (b) of FIG. 13B may be zoomed out relative to (a) of FIG. 13B. Accordingly, it is possible to maintain balance between the objects in the image while reducing degradation. In particular, it is possible to suppress the occurrence of black areas when a process of reducing degradation is performed.

. FIG. 13C illustrates another example of an image 1005 at a first time, an image 1005b at a second time, and an image 1005c at a third time.

. Referring to FIG. 13C, the signal processing device 170 according to an embodiment of the present disclosure may be configured to separate, at a first time T1, a first object OBa and a second object OBb of a plurality of objects by a first distance Da and separate a third object OBc and a fourth object OBd of the plurality of objects by a third distance D1, as shown in (a) of FIG. 13C.

. Next, the signal processing device 170 according to the embodiment of the present disclosure may be configured to separate, at a second time T2 after the first time T1, the first object OBa and the second object OBb by a second distance Db different from the first distance Da and the third object OBc and separate the fourth object OBd by a fourth distance D2 different from the third distance D1, as shown in (b) of FIG. 13C.

. Next, the signal processing device 170 according to the embodiment of the present disclosure may be configured to separate, at a third time T3 after the second time T2, the first object OBa and the second object OBb by a distance Dc different from the second distance Db and separate the third object OBc and the fourth object OBd by a distance D3 different from the fourth distance D2, as shown in (c) of FIG. 13C.

. For example, at the second time T2, the signal processing device 170 may be configured to move the first object OBa in the leftward direction, which is a first direction, move the second object OBb in the rightward direction, which is a second direction different from the first direction, move the third object OBc in the upward direction, which is a third direction, and move the fourth object OBd in the downward direction, which is a fourth direction different from the third direction.

. Then, at the third time T3, the signal processing device 170 may be configured to move the first object OBa further in the leftward direction, which is the first direction, move the second object OBb further in the rightward direction, which is the second direction different from the first direction, move the third object OBc further in the upward direction, which is the third direction, and move the fourth object OBd further in the downward direction, which is the fourth direction different from the third direction.

. Thus, it is possible to maintain balance between the objects in the image while reducing degradation. In particular, it is possible to suppress the occurrence of black areas when a process of reducing degradation is performed.

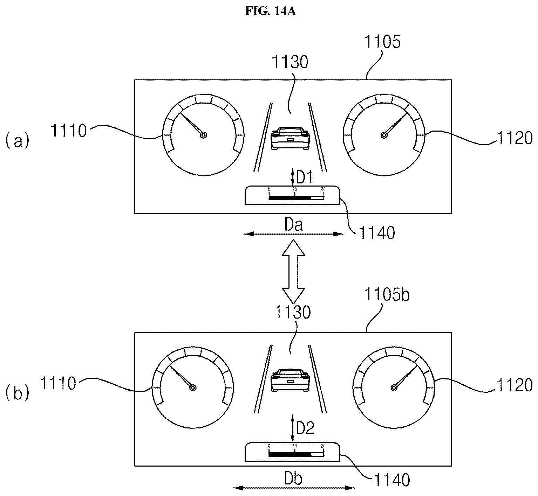

. *FIG. 14A* illustrates yet another example of a cluster image 1105 at a first time and a cluster image 1105b at a second time.

. Referring to FIG. 14A, the signal processing device 170 according to an embodiment of the present disclosure may be configured to separate a first object 1110 and a second object 1120 among of a plurality of objects in the cluster image 1105 by a first distance Da at a first time T1 and separate a third object 1130 and a fourth object 1140 by a third distance D1 at the first time T1, as shown in (a) of FIG. 14A.

. Here, the first object 1110 may include speed information, the second object 1120 may include RMP (revolutions per minute) information, the third object 1130 may include vehicle traveling direction information, and the fourth object 1140 may include vehicle fuel consumption information.

. Next, as shown in (b) of FIG. 14A, the signal processing device 170 according to the embodiment of the present disclosure may be configured to separate, at a second time T2 after the first time T1, the first object 1110 and the second object 1120 in the cluster image 1105b by a second distance Db greater than the first distance Da and the third object 1130 and separate the fourth object 1140 in the cluster image 1105b by a fourth distance D2 greater than the third distance D1.

. For example, at the second time T2, the signal processing device 170 may be configured to move the first object 1110 in the leftward direction, which is a first direction, move the second object 1120 in the rightward direction, which is a second direction different from the first direction, move the third object 1130 in the upward direction, which is a third direction, and move the fourth object 1140 in the downward direction, which is a fourth direction different from the third direction.

. As the first object 1110, the second object 1120, the third object, and the fourth object 1140 are moved in different directions, instead of in the same direction, it is possible to suppress the occurrence of black areas. Further, it is possible to maintain balance between the objects in the image while reducing degradation such as image retention.

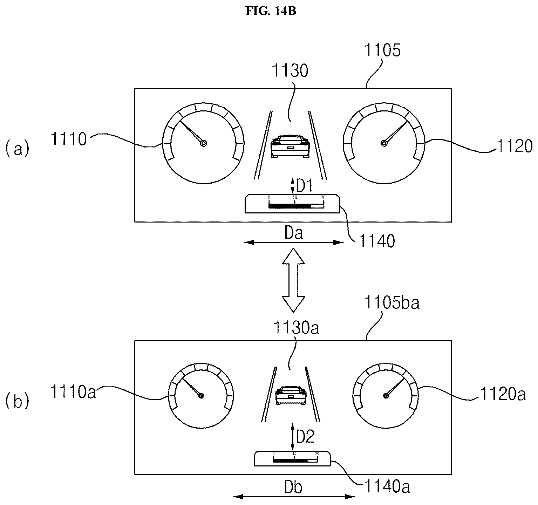

. FIG. 14B illustrates yet another example of a cluster image 1105 at a first time and a cluster image 1105ba at a second time.

. Referring to the figure, FIG. 14B is similar to FIG. 14B, except that the size of the first object 1110a and the second object 1120a displayed in the cluster image 1105ba at the second time T2 is less than the size of the first object 1110 and the second object 1120 displayed in the cluster image 1105 at the first time T1, as shown in (b) of FIG. 14B.

. That is, as shown in (b) of FIG. 14B, the signal processing device 170 may control the size of the first object 1110a and the second object 1120a in the cluster image 1105ba displayed at the second time T2 to be less than the size of the first object 1110 and the second object 1120 in the cluster image 1105 displayed at the first time T1 .

. Meanwhile, the signal processing device 170 may control the size of the third object 1130a and the fourth object 1140a in the cluster image 1105ba displayed at the second time T2 to be less than the size of the third object 1130 and the fourth object 1140 in the cluster image 1105 displayed at the first time T1.

. In other words, (b) of FIG. 14B may be zoomed out relative to (a) of FIG. 14B. Accordingly, it is possible to maintain balance between the objects in the image while reducing degradation. In particular, it is possible to suppress the occurrence of black areas when a process of reducing degradation is performed.

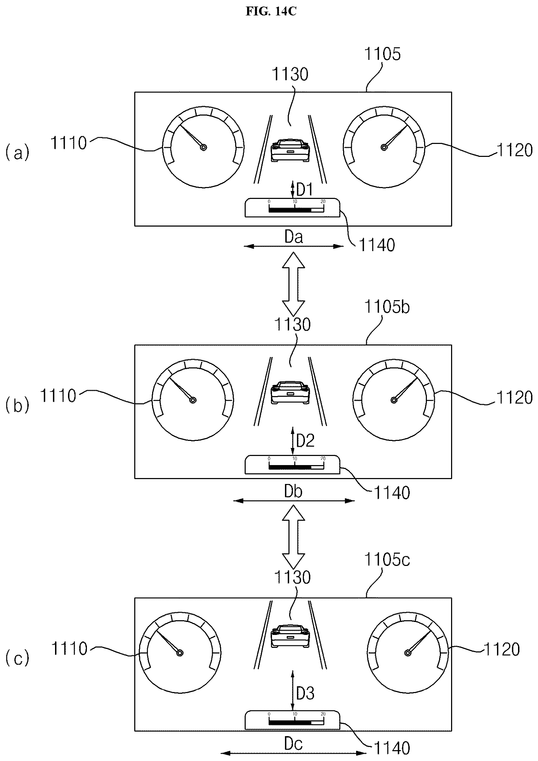

. FIG. 14C illustrates another example of a cluster image 1105 at a first time, a cluster image 1105b at a second time, and a cluster image 1105c at a third time.

. Referring to FIG. 14C, the signal processing device 170 according to an embodiment of the present disclosure may be configured to separate a first object 1110 and a second object 1120 among a plurality of objects in the cluster image 1105 by a first distance Da at a first time T1 and separate a third object 1130 and a fourth object 1140 by a third distance D1 at the first time T1, as shown in (a) of FIG. 14C.

. Next, as shown in (b) of FIG. 14C, the signal processing device 170 according to the embodiment of the present disclosure may be configured to separate, at a second time T2 after the first time T1, the first object 1110 and the second object 1120 in the cluster image 1105b by a second distance Db greater than the first distance Db and separate the third object 1130 and the fourth object 1140 in the cluster image 1105b by a fourth distance D2 greater than the third distance D1.

. Next, as shown in (c) of FIG. 14C, the signal processing device 170 according to the embodiment of the present disclosure may be configured to separate, at a third time T3 after the second time T2, the first object 1110 and the second object 1120 in the cluster image 1105c by a distance Dc greater than the second distance Db and separate the third object 1130 and the fourth object 1140 in the cluster image 1105c by a distance D3 greater than the fourth distance D2.

. Thus, it is possible to maintain balance between the objects in the image while reducing degradation. In particular, it is possible to suppress the occurrence of black areas when a process of reducing degradation is performed.

. Meanwhile, similar to FIG. 11D, in a state where the first to fourth objects 1110 to 1140 and the plurality of icons 922, 923, 924, 1122, and 1124 are displayed at the first time T1, the signal processing device 170 may be configured to move, at the second time T2, the third icon adjacent to the third object 1130 in a third direction.

. For example, at the second time T2, the signal processing device 170 may be configured to move the first icon 922 and the third icon 924 among the plurality of icons 922, 923, 924, 1122 and 1124 of FIG. 11D in the upward direction corresponding to the movement direction of the third object 1130.

. Thus, it is possible to maintain balance between the objects in the image while reducing degradation.

. FIG. 15 is a flowchart illustrating the operation of an image display apparatus according to yet another embodiment of the present disclosure.

. Referring to FIG. 15, the signal processing device 170 in the image display apparatus 100 according to yet another embodiment of the present disclosure may be configured to determine whether it is in an afterimage reduction mode (S910) and, based on a determination that it is in the afterimage reduction mode, may be configured to set an area Ara including a first object OBa and a second object OBb of a plurality of objects to a first size at a first time T1 (S1520).

. Next, the signal processing device 170 according to the embodiment of the present disclosure may be configured to set, at a second time T2 after the first time T1, the area Arb including the first object OBab and the second object OBbb to a second size (S1530).

. For example, when displaying the plurality of objects, the signal processing device 170 may be configured to set, at the first time T1, the area Ara including the first object OBa and the second object OBb to a first size and display an image 1005 including the area Ara.

. Meanwhile, when displaying the plurality of objects, the signal processing device 170 may control, at the second time T2 after the first time T1, the area Arb including the first object OBab and the second object OBbb to display an image 1005b of a second size greater than the first size.

. That is, at the second time T2, the first object OBa moves in the leftward direction, which is a first direction, and the second object OBbb moves in the rightward direction, which is a second direction different from the first direction.

. Thus, it is possible to maintain balance between the objects in the image while reducing degradation. In particular, as the first object OBab and the second object OBbb are moved in different directions, instead of in the same direction, it is possible to suppress the occurrence of black areas.

. FIGS. 16A to 17D are diagrams for explaining FIG. 15.

. FIG. 16A illustrates yet another example of an image 1005 at a first time and an image 1005b at a second time.

. Referring to FIG. 16A, the signal processing device 170 according to an embodiment of the present disclosure may be configured to set, at a first time T1, an area Ara including a first object OBa and a second object OBb of a plurality of objects to a first size, as shown in (a) ofFIG. 16A.

. Next, the signal processing device 170 according to the embodiment of the present disclosure may be configured to set, at a second time T2 after the first time T1, the area Arb including the first object OBab and the second object OBbb to a second size greater than the first size, as shown in (b) of FIG. 16A.

. That is, when displaying the plurality of objects, the signal processing device 170 may be configured to scale the image 1005 and display the scaled image 1005b at the second time T2 after the first time T1.

. Accordingly, a first distance Da between the first object OBa and the second object OBb at the first time T1 is increased to a second distance Db between the first object OBab and the second object OBbb in the scaled image 1005b.

. That is, at the second time T2, the first object OBab moves in the leftward direction, which is a first direction, and the second object OBbb moves in the rightward direction, which is a second direction different from the first direction.

. Thus, it is possible to maintain balance between the objects in the image while reducing degradation. In particular, as the first object OBab and the second object OBbb are moved in different directions, instead of in the same direction, it is possible to suppress the occurrence of black areas.

. Meanwhile, the size of the objects in (b) of FIG. 16A may be greater than the size of the objects in (a) of FIG. 16A.

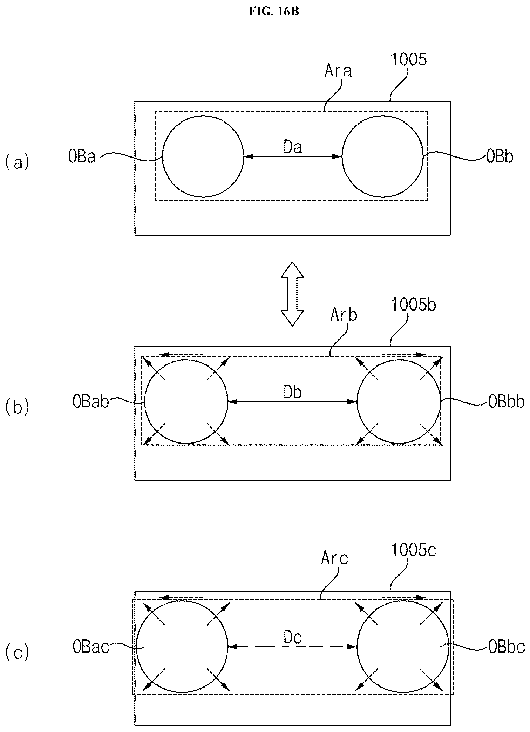

. FIG. 16B illustrates yet another example of an image 1005 at a first time, an image 1005b at a second time, and an image 1005c at a third time.

. Referring to FIG. 16B, the signal processing device 170 according to an embodiment of the present disclosure may be configured to set, at a first time T1, an area Ara including a first object OBa and a second object OBb of a plurality of objects to a first size, as shown in (a) of FIG. 16B.

. Next, the signal processing device 170 according to the embodiment of the present disclosure may be configured to set, at a second time T2 after the first time T1, the area Arb including the first object OBab and the second object OBbb to a second size greater than the first size, as shown in (b) of FIG. 16B.

. Next, the signal processing device 170 according to the embodiment of the present disclosure may be configured to set, at a third time T3 after the second time T2, the area Arc including the first object OBac and the second object OBbc to a third size greater than the second size, as shown in (c) of FIG. 16B.

. That is, when displaying the plurality of objects, the signal processing device 170 may be configured to scale the image 1005 to display the scaled image 1005b at the second time T2 after the first time T1, and may be configured to further scale the scaled image 1005b to display the further scaled image 1005c at the third time T3 after the second time T2.

. Accordingly, a first distance Da between the first object OBa and the second object OBb at the first time T1 is increased to a second distance Db between the first object OBab and the second OBbb in the scaled image 1005b at the second time T2.

. In addition, the second distance Db between the first object OBab and the second OBbb at the second time T2 is increased to a third distance Dc between the first OBac and the second object OBbc in the further scaled image 1005c at the third time T3.

. That is, at the second time T2, the first object OBab moves in the leftward direction, which is a first direction, and the second object OBbb moves in the rightward direction, which is a second direction different from the first direction.

. In addition, at the third time T3, the first object OBac moves further in the leftward direction, which is the first direction, and the second object OBbc moves further in the rightward direction, which is the second direction different from the first direction.

. Thus, it is possible to maintain balance between the objects in the image while reducing degradation. In particular, it is possible to suppress the occurrence of black areas when a process of reducing degradation is performed.

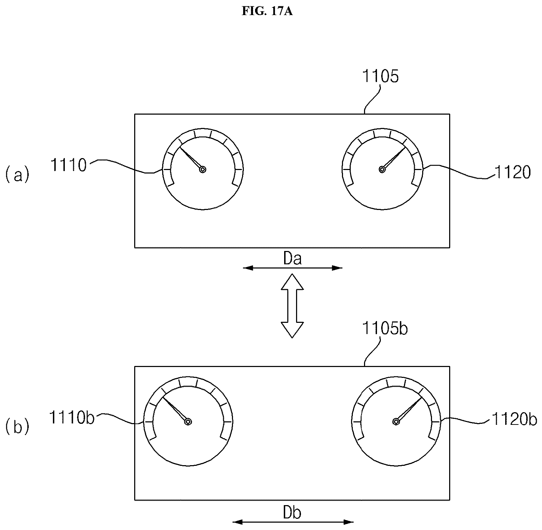

. FIG. 17A illustrates yet another example of a cluster image 1105 at a first time and a cluster image 1105b at a second time.

. Referring to FIG. 17A, the signal processing device 170 according to an embodiment of the present disclosure may be configured to set, at a first time T1, an area including a first object 1110 and a second object 1120 of a plurality of objects in the cluster image 1105 to a first size, as shown in (a) of FIG. 17A.

. Here, the first object 1110 may include speed information, and the second object 1120 may include RPM (revolutions per minute) information.

. Next, the signal processing device 170 according to the embodiment of the present disclosure may be configured to set, at a second time T2 after the first time T1, the area including the first object 1110b and the second object 1120b in the cluster image 1105b to a second size, as shown in (b) of FIG. 17A.

. Accordingly, a first distance Da between the first object 1110 and the second object 1120 at the first time T1 is increased to a second distance Db between the first object 1110b and the second object 1120b in the scaled image 1005b.

. That is, at the second time T2, the first object 1110b moves in the leftward direction, which is a first direction, and the second object 1120b moves in the rightward direction, which is a second direction different from the first direction.

. Thus, it is possible to maintain balance between the objects in the image while reducing degradation. In particular, as the first object 1 110b and the second object 1120b are moved in different directions, instead of in the same direction, it is possible to suppress the occurrence of black areas.

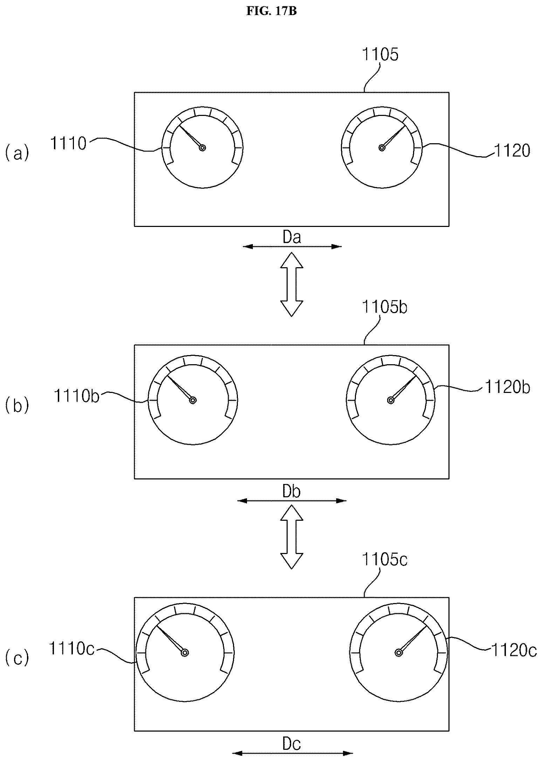

. FIG. 17B illustrates yet another example of a cluster image 1105 at a first time, a cluster image 1105b at a second time, and a cluster image 1105c at a third time.

. Referring to the figure, FIG. 17B is similar to FIG. 17A, except that the cluster image 1105c is further displayed at the third time.

. That is, at a third time T3 after the second time T2, the signal processing device 170 according to an embodiment of the present disclosure may be configured to set the area including the first object 11 10c and the second object 1120c in the cluster image 1105c to a third size, as shown in (c) of FIG. 17B.

. Accordingly, the second distance Db between the first object 1110b and the second object 1120b at the second time T2 is increased to a third distance Dc between the first object 1110c and the second object 1120c in the further scaled image 1105c.

. That is, at the second time T2, the first object 1110b moves further in the leftward direction, which is the first direction, and the second object 1120b moves further in the rightward direction, which is the second direction different from the first direction.

. Thus, it is possible to maintain balance between the objects in the image while reducing degradation. In particular, as the first object 1110c and the second object 1120c are moved in different directions, instead of in the same direction, it is possible to suppress the occurrence of black areas.

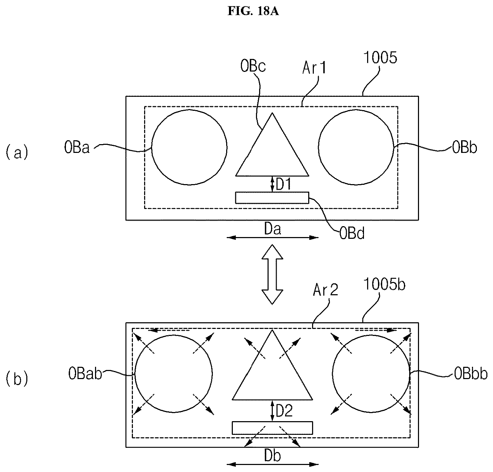

. FIG. 18A illustrates yet another example of an image 1005 at a first time and an image 1005b at a second time.

. Referring to the figure, FIG. 18A is similar to FIG. 16A, except that a third object OBc and a fourth object OBd are further included in the area Ara.

. The signal processing device 170 according to an embodiment of the present disclosure may be configured to set, at a first time T1, an area Ar1 including a first object OBa, a second object OBb, a third object OBc, and a fourth object OBd of a plurality of objects to a first size, as shown in (a) of FIG. 18A.

. Next, the signal processing device 170 according to the embodiment of the present disclosure may be configured to control, at a second time T2 after the first time T1, the area Ar2 including the first object OBab, the second object OBbb, the third object OBcb, and the fourth object OBdb to be a second size greater than the first size, as shown in (b) of FIG. 18A.

. That is, when displaying the plurality of objects, the signal processing device 170 according to the embodiment of the present disclosure may be configured to scale the image 1005 to display the scaled image 1005b at the second time T2 after the first time T1.

. Accordingly, a first distance Da between the first object OBa and the second object OBb at the first time T1 is increased to a second distance Db between the first object OBab and the second object OBbb in the scaled image 1005b.

. In other words, at the second time T2, the first object OBab moves in the leftward direction, which is a first direction, and the second object OBbb moves in the rightward direction, which is a second direction different from the first direction.

. In addition, a third distance D1 between the third object OBc and the fourth object OBd at the first time T1 is increased to a fourth distance D2 between the third object OBcb and the fourth object OBdb in the scaled image 1005b.

. In other words, at the second time T2, the third object OBcb moves in the upward direction, which is a third direction, and the fourth object OBdb moves in the downward direction, which is a fourth direction different from the third direction.

. Thus, it is possible to maintain balance between the objects in the image while reducing degradation. In particular, as the first object OBab to the fourth object OBdb are moved in different directions, instead of in the same direction, it is possible to suppress the occurrence of black areas.

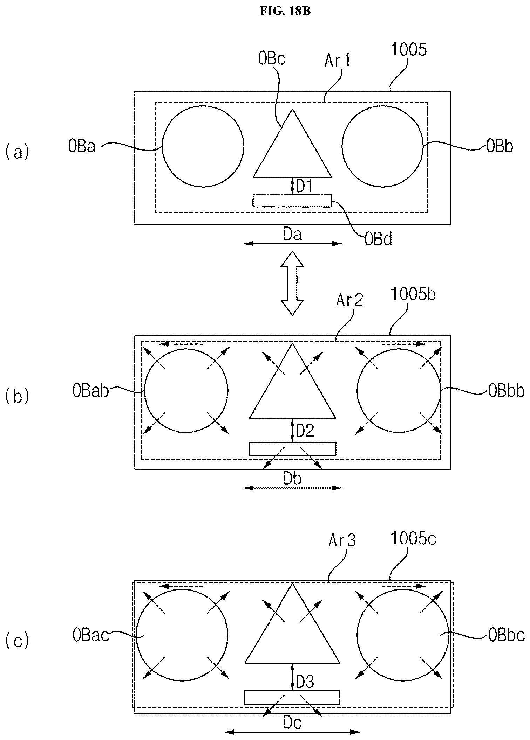

. FIG. 18B illustrates yet another example of an image 1005 at a first time, an image 1005b at a second time, and an image 1005c at a third time.

. Referring to the figure, FIG. 18B is similar to FIG. 18A, except that the image 1005c is further displayed at the third time.

. That is, the signal processing device 170 according to an embodiment of the present disclosure may be configured to set, at a first time T1, an area Ar1 including a first object OBa, a second object OBb, a third object OBc, and a fourth object OBd of a plurality of objects to a first size, as shown in (a) of FIG. 18B.

. Next, the signal processing device 170 according to the embodiment of the present disclosure may be configured to set, at a second time T2 after the first time T1, the area Ar2 including the first object OBab, the second object OBbb, the third object OBcb, and the fourth object OBdb to a second size greater than the first size, as shown in (b) of FIG. 18B.

. Next, the signal processing device 170 according to the embodiment of the present disclosure may be configured to set, at a third time T3 after the second time T2, the areaAr3 including the first object OBac, the second object OBbc, the third object OBcc, and the fourth object OBdc to a third size greater than the second size, as shown in (c) of FIG. 18B.

. That is, when displaying the plurality of objects, the signal processing device 170 may be configured to scale the image 1005 to display the scaled image 1005b at the second time T2 after the first time T1, and may be configured to further scale the scaled image 1005b to display the further scaled image 1005c at the third time T3 after the second time T2.

. Accordingly, a second distance Db between the first object OBab and the second object OBbb at the second time T2 is increased to a distance Dc between the first object OBac and the second object OBbc in the further scaled image 1005c at the third time T3.

. In addition, a fourth distance D2 between the third object OBcb and the fourth object OBdb at the second time T2 is increased to a distance D3 between the third object OBcc and the fourth object OBdc in the further scaled image 1005c at the third time T3.

. Thus, it is possible to maintain balance between the objects in the image while reducing degradation. In particular, it is possible to suppress the occurrence of black areas.

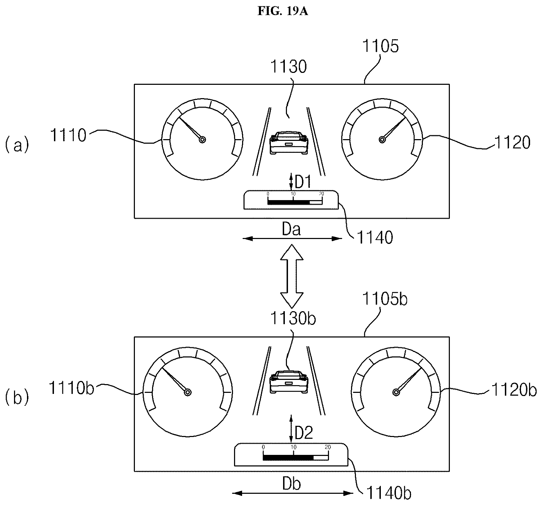

. FIG. 19A illustrates yet another example of a cluster image 1105 at a first time and a cluster image 1105b at a second time.

. Referring to FIG. 19A, the signal processing device 170 according to an embodiment of the present disclosure may be configured to set, at a first time T1, the size of an area including a first object 1110, a second object 1120, a third object 1130, and a fourth object 1140 of a plurality of objects in the cluster image 1105 to a first size, as shown in (a) of FIG. 19A.

. Here, the first object 1110 may include speed information, the second object 1120 may include RMP (revolutions per minute) information, the third object 1130 may include vehicle traveling information, and the fourth object 1140 may include vehicle fuel consumption information.

. Next, the signal processing device 170 according to the embodiment of the present disclosure may be configured to set, at a second time T2 after the first time T1, the area including the first object 1110b, the second object 1120b, the third object 1130b, and the fourth object 1140b in the cluster image 1105b to a second size, as shown in (b) of FIG. 19A.

. Accordingly, a first distance Da between the first object 1110 and the second object 1120 at the first time T1 is increased to a second distance Db between the first object 1110b and the second object 1120b in the scaled image 1005b.

. In addition, a third distance D1 between the third object 1130 and the fourth object 1140 at the first time T1 is increased to a fourth distance D2 between the third object 1130b and the fourth object 1140b in the scaled image 1005b.

. Thus, it is possible to maintain balance between the objects in the image while reducing degradation. In particular, as the first object 1110b to the fourth object 1140b are moved in different directions, instead of in the same direction, it is possible to suppress the occurrence of black areas.

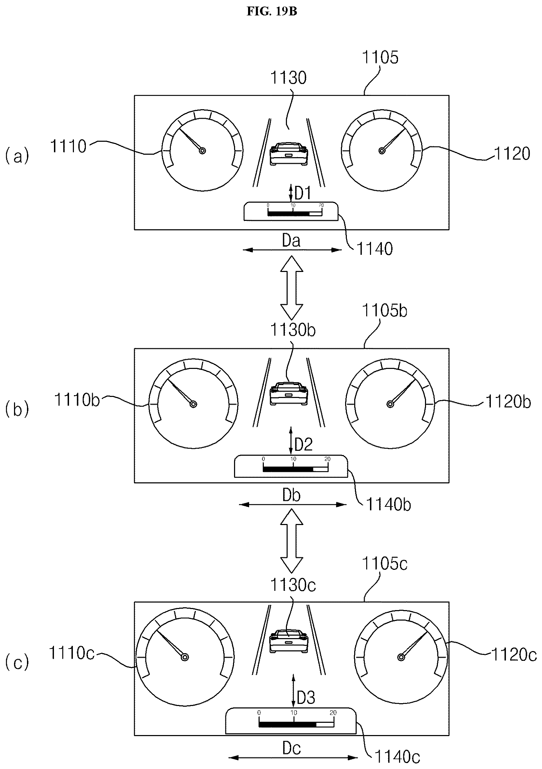

. FIG. 19B illustrates yet another example of a cluster image 1105 at a first time, a cluster image 1105b at a second time, and a cluster image 1105c at a third time.

. Referring to the figure,FIG. 19B is similar to FIG. 19A, except that the cluster image 1105c is displayed at the third time.

. That is, the signal processing device 170 according to an embodiment of the present disclosure may be configured to set, at a third time T3 after the second time T2, the area including the first object 1110c, the second object 1120c, the third object 1130c, and the fourth object 1140c in the cluster image 1105c to a third size.

. Accordingly, the second distance Db between the first object 1110b and the second object 1120b at the second time T2 is increased to a distance Dc between the first object 1110c and the second object 1120c in the further scaled image 1105c.

. In addition, the fourth distance D2 between the third object 1130b and the fourth object 1140b at the second time T2 is increased to a distance D3 between the third object 1130c and the fourth object 1140c in the further scaled image 1005c.

. Thus, it is possible to maintain balance between the objects in the image while reducing degradation. In particular, as the first object 1110c to the fourth object 1140c are moved in different directions, instead of in the same direction, it is possible to suppress the occurrence of black areas.

. As described above, an image display apparatus according to one embodiment of the present disclosure includes a display including an organic light emitting diode (OLED) panel, and a signal processing device to output an image signal to the display. When displaying a plurality of objects apart from each other, the signal processing device is configured to separate, at a first time, a first object and a second object of the plurality of objects by a first distance and separate, at a second time after the first time, the first object and the second object by a second distance different from the first distance. Accordingly, it is possible to maintain balance between the objects in the image while reducing degradation. In particular, it is possible to suppress the occurrence of black areas when a process of reducing degradation is performed.

. When displaying the plurality of objects, the signal processing device may separate, at a second time after the first time, the first object and the second object by a second distance greater than the first distance. Accordingly, it is possible to maintain balance between the objects in the image while reducing degradation.

. The signal processing device may control sizes of the first object and the second object displayed at the second time to be less than sizes of the first object and the second object displayed at the first time. Accordingly, it is possible to maintain balance between the objects in the image while reducing degradation.

. At the second time, the signal processing device may be configured to move the first object in a first direction and move the second object in a second direction different from the first direction. Accordingly, it is possible to maintain balance between the objects in the image while reducing degradation.

. At the second time, the signal processing device may be configured to move the first object in a first direction and move the second object in a second direction opposite to the first direction. Accordingly, it is possible to maintain balance between the objects in the image while reducing degradation.

. When displaying the plurality of objects, the signal processing device may separate, at the first time, a third object and a fourth object of the plurality of objects by a third distance and may separate, at the second time, the third object and the fourth object by a fourth distance different from the third distance. Accordingly, it is possible to maintain balance between the objects in the image while reducing degradation.

. When displaying the plurality of objects, the signal processing device may be configured to separate, at the second time after the first time, the third obj ect and the fourth obj ect by a fourth distance greater than the third distance. Accordingly, it is possible to maintain balance between the objects in the image while reducing degradation.

. The signal processing device may control sizes of the third object and the fourth object displayed at the second time to be less than sizes of the third object and the fourth object displayed at the first time. Accordingly, it is possible to maintain balance between the objects in the image while reducing degradation.

. At the second time, the signal processing device may be configured to move the third object in a third direction and move the fourth object in a fourth direction different from the third direction. Accordingly, it is possible to maintain balance between the objects in the image while reducing degradation.

. At the second time, the signal processing device may be configured to move the third object in a third direction and move the fourth object in a fourth direction opposite to the third direction. Accordingly, it is possible to maintain balance between the objects in the image while reducing degradation.

. At the second time, the signal processing device may be configured to move a first icon adjacent to the first object in the first direction and move a second icon adjacent to the second object in the second direction different from the first direction. Accordingly, it is possible to maintain balance between the objects and the icons in the image while reducing degradation.

. The signal processing device may be configured to move, at the second time, a third icon adjacent to the third object in a third direction. Accordingly, it is possible to maintain balance between the objects in the image while reducing degradation.

. An image display apparatus according to another embodiment of the present disclosure includes a display including an organic light emitting diode (OLED) panel, and a signal processing device to output an image signal to the display. When displaying a plurality of objects apart from each other, the signal processing device may be configured to set, at a first time, an area including a first object and a second object of the plurality of objects to a first size and set, at a second time after the first time, the area including the first object and the second object to a second size different from the first size. Accordingly, it is possible to maintain balance between the objects in the image while reducing degradation. In particular, it is possible to suppress the occurrence of black areas when a process of reducing degradation is performed.

. When displaying the plurality of objects, the signal processing device may set, at a second time after the first time, the area including the first object and the second object to a second size greater than the first size. Accordingly, it is possible to maintain balance between the objects in the image while reducing degradation.

. At the second time, the signal processing device may be configured to move the first object in a first direction and move the second object in a second direction different from the first direction. Accordingly, it is possible to maintain balance between the objects in the image while reducing degradation.

. At the second time, the signal processing device may be configured to move the first object in a first direction and move the second object in a second direction opposite to the first direction. Accordingly, it is possible to maintain balance between the objects in the image while reducing degradation.

. When displaying the plurality of objects, the signal processing device may set, at the first time, an area including the first object, the second object, a third object, and a fourth object of the plurality of objects to a third size and may set, at the second time, the area including the first to fourth objects to a fourth size different from the third size. Accordingly, it is possible to maintain balance between the objects in the image while reducing degradation.

. The signal processing device may control sizes of the first to fourth objects displayed at the second time to be greater than sizes of the first to fourth objects displayed at the first time. Accordingly, it is possible to maintain balance between the objects in the image while reducing degradation.

. At the second time, the signal processing device may be configured to move the third object in a third direction and move the fourth object in a fourth direction different from the third direction. Accordingly, it is possible to maintain balance between the objects in the image while reducing degradation.

. At the second time, the signal processing device may be configured to move the third object in a third direction and move the fourth object in a fourth direction opposite to the third direction. Accordingly, it is possible to maintain balance between the objects in the image while reducing degradation.

. At the second time, the signal processing device may be configured to move a first icon adjacent to the first object in the first direction and move a second icon adjacent to the second object in the second direction different from the first direction. Accordingly, it is possible to maintain balance between the objects and the icons in the image while reducing degradation.

. The signal processing device may be configured to move, at the second time, a third icon adjacent to the third object in the third direction. Accordingly, it is possible to maintain balance between the objects in the image while reducing degradation.

## Claims

1. An image display apparatus (100) comprising:
a display (180) including an organic light emitting diode (OLED) panel (210); and
a signal processing device (170) to output an image signal to the display,
wherein, upon displaying a plurality of objects apart from each other, the signal processing device (170) is configured to:
separate, at a first time, a first object and a second object of the plurality of objects by a first distance; and
separate, at a second time after the first time, the first object and the second object by a second distance different from the first distance.

2. The image display apparatus of claim 1, wherein, upon displaying the plurality of objects, the signal processing device (170) is configured to separate, at a second time after the first time, the first object and the second object by a second distance greater than the first distance.

3. The image display apparatus of any one of claims 1 to 2, wherein the signal processing device (170) is configured to control sizes of the first object and the second object displayed at the second time to be less than sizes of the first object and the second object displayed at the first time.

4. The image display apparatus of any one of claims 1 to 3, wherein, at the second time, the signal processing device (170) is configured to:
move the first object in a first direction; and
move the second object in a second direction different from the first direction.

5. The image display apparatus of any one of claims 1 to 4, wherein, upon displaying the plurality of objects, the signal processing device (170) is configured to:
separate, at the first time, a third object and a fourth object of the plurality of objects by a third distance; and
separate, at the second time, the third object and the fourth object by a fourth distance different from the third distance.

6. The image display apparatus of claim 5, wherein, upon displaying the plurality of objects, the signal processing device (170) is configured to separate, at a second time after the first time, the third object and the fourth object by a fourth distance greater than the third distance.

7. The image display apparatus of claim 5, wherein the signal processing device (170) is configured to control sizes of the third object and the fourth object displayed at the second time to be less than sizes of the third object and the fourth object displayed at the first time.

8. The image display apparatus of claim 5, wherein, at the second time, the signal processing device (170) is configured to:
move the third object in a third direction; and
move the fourth object in a fourth direction different from the third direction.

9. The image display apparatus of claim 4, wherein, at the second time, the signal processing device (170) is configured to:
move a first icon adjacent to the first object in the first direction; and
move a second icon adjacent to the second object in the second direction different from the first direction.

10. The image display apparatus of claim 8, wherein the signal processing device (170) is configured to move, at the second time, a third icon adjacent to the third object in a third direction.
